(19) Europäisches Patentamt
European Patent Office
Office européen des brevets

(11) EP 3 504 041 B1

(12) **EUROPÄISCHE PATENTSCHRIFT**

(45) Veröffentlichungstag und Bekanntmachung des Hinweises auf die Patenterteilung:
**24.03.2021 Patentblatt 2021/12**

(21) Anmeldenummer: **17755492.0**

(22) Anmeldetag: **21.08.2017**

(51) Int Cl.:
**B29C 45/44** *(2006.01)* **B29L 31/00** *(2006.01)*

(86) Internationale Anmeldenummer:
**PCT/EP2017/070999**

(87) Internationale Veröffentlichungsnummer:
**WO 2018/036948 (01.03.2018 Gazette 2018/09)**

(54) **VERFAHREN ZU EINER ZUMINDEST TEILWEISEN EXTRAKTION EINES FORMKERNES AUS EINEM SPRITZGUSSWERKZEUG UND SPRITZGUSSWERKZEUG**

METHOD FOR AT LEAST PARTIALLY EXTRACTING A MOULD CORE FROM AN INJECTION-MOULDING TOOL, AND INJECTION-MOULDING TOOL

PROCÉDÉ PERMETTANT D'EXTRAIRE AU MOINS PARTIELLEMENT UN NOYAU D'UN MOULE À INJECTION ET MOULE À INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2016 DE 102016115841**

(43) Veröffentlichungstag der Anmeldung:
**03.07.2019 Patentblatt 2019/27**

(73) Patentinhaber: **GKN Driveline International GmbH 53797 Lohmar (DE)**

(72) Erfinder: **BAUKLOH, Horst 58540 Meinerzhagen (DE)**

(74) Vertreter: **Geskes, Christoph Geskes Patent- und Rechtsanwälte Gustav-Heinemann-Ufer 74b 50968 Köln (DE)**

(56) Entgegenhaltungen:
**EP-A1- 2 952 327 US-A1- 2012 153 540**

**Beschreibung**

Die Erfindung betrifft ein Verfahren zu einer zumindest teilweisen Extraktion eines Formkernes mit zumindest einer Hinterschneidung aus einem Spritzgusswerkzeug sowie ein Spritzgusswerkzeug mit einem Hinterschneidungen aufweisenden beziehungsweise bildenden Formkern. Weiterhin betrifft die Erfindung ein Verfahren zur Herstellung eines Faltenbalges, die Verwendung eines Spritzgusswerkzeuges zur Herstellung eines Faltenbalges sowie einen Faltenbalg, hergestellt im Spritzgussverfahren.

Aus dem Stand der Technik sind Spritzgusswerkzeuge bekannt, die in der Lage sind Werkstücke mit Hinterschneidungen zu produzieren. Beispielsweise geht aus DE 10 2010 004 227 B4 ein Verfahren und eine Vorrichtung zum Entformen von Spritzgusshohlkörpern mit Hinterschneidungen in der Innenkontur hervor. Der Formkern des Spritzgusswerkzeuges ist hierzu in mehrere Segmente aufgeteilt, die nach Entformung eines zentralen Segments in Richtung einer Mittellängsachse verfahrbar sind.

EP 2 952 327 A1 offenbart eine Fertigungsvorrichtung für einen Faltenbalg für ein Gleichlaufgelenk ist mit einer Formwerkzeug zum Spritzgießen eines Formkörpers unter Verwendung einer Innenmatrize, die durch radiales Anordnen von geteilten Matrizen entlang der äußeren Umfangsfläche einer sich vertikal erstreckenden Kernwelle konfiguriert ist.

US2012/153540 A1 offenbart eine Matrize zur Herstellung eines Faltenbalges durch Spritzgießen mit einem zentralen Kern und eine Vielzahl von Teilformen zum Formen einer inneren Umfangsfläche des Faltenbalges.

US 7 670 535 B2 offenbart ein Verfahren zur Herstellung eines Faltenbalgs, wobei der Faltenbalg in einem Formraum gespritzt wird und der Formraum ein Spiralgewinde aufweist, mittels dem der Faltenbalg nach dem spritzen herausgeschraubt wird.

Die aus dem Stand der Technik bekannten Verfahren und Spritzgusswerkzeuge können Hinterschneidungen in Innenkonturen eines Werkstückes bis zu etwa 40 % erzielen. Bei stärkeren Hinterschneidungen kommt es zu Kollisionen zwischen einer Ausprägung des Formkernes, der die Hinterschneidung formt, und inneren Vorsprüngen, wie z. B. einer Innenseite eines Faltentales oder loben Bereichen im gelenkegehäuseseitigen Bindersitzbereich bei Faltenbalgen für Tripodegelenke, dass die Ausprägung bei der Entformung passiert.

Aufgabe der vorliegenden Erfindung ist es, ein verbessertes Verfahren zu einer zumindest teilweisen Extraktion eines zumindest eine Hinterschneidung bildenden Formkerns, ein verbessertes Spritzgusswerkzeug und einen verbesserten Formkern, ein verbessertes Verfahren zur Herstellung eines Faltenbalges, eine Verwendung eines Spritzgusswerkzeuges und einen verbesserten Faltenbalg zur Verfügung zu stellen. Insbesondere ist es Aufgabe der Erfindung, ein Spritzgusswerkzeug und ein Verfahren zur Entformung des Spritzgusswerkzeuges zur Verfügung zu stellen, welches die Vorsehung von Hinterschneidungen größer etwa 40 % in der Innenkontur eines Werkstückes, das mit dem Spritzgusswerkzeug hergestellt wird, erlaubt.

Die Aufgabe wird erfindungsgemäß gelöst mittels eines Verfahrens zu einer zumindest teilweisen Extraktion eines zumindest eine Hinterschneidung bildenden Formkerns nach Anspruch 1, eines Formkerns gemäß Anspruch 5, eines Spritzgusswerkzeugs nach Anspruch 6, eines Verfahrens zur Herstellung eines Faltenbalges nach Anspruch 12, einer Verwendung eines Spritzgusswerkzeuges nach Anspruch 13 und mittels eines Faltenbalges nach Anspruch 14. Weitere vorteilhafte Ausgestaltungen sind aus der nachfolgenden Beschreibung, den Figuren sowie den Unteransprüchen zu entnehmen. Die einzelnen Merkmale der beschriebenen Ausgestaltungen sind jedoch nicht auf diese beschränkt, sondern können untereinander mit anderen Merkmalen zur weiteren Ausgestaltungen verknüpft werden.

Es wird ein Verfahren zu einer zumindest teilweisen Extraktion eines zumindest eine Hinterschneidung bildenden Formkernes mit zumindest einer Hinterschneidung aus einem Spritzgusswerkzeug, welches in einer Ausgestaltung mehrere Kavitäten und damit auch mehrere Formkerne aufweisen kann, vorgeschlagen, wobei der Formkern einen Innenkern und eine Anzahl von Segmenten, die um den Innenkern angeordnet sind, aufweist, wobei der Innenkern entlang einer Mittellängsachse des Formkerns verfahren wird. Zumindest eine erste Gruppe von ersten Segmenten wird in einer Bewegungsrichtung senkrecht zur Mittellängsachse verfahren. Sie wird bevorzugt in einem weiteren Schritt nach deren erster Bewegung entlang der Mittellängsachse des Formkerns verfahren. Zumindest eine Gruppe von zweiten Segmenten wird in zumindest zwei Bewegungsrichtungen auf zumindest einer Ebene, deren Vektor parallel zur Mittellängsachse angeordnet ist, verfahren, wobei die Bewegungen in die zumindest zwei Bewegungsrichtungen zeitlich aufeinander folgen. Diese Gruppe von zweiten Segmenten wird bevorzugt in einem weiteren Schritt nach deren erster Bewegung entlang der Mittellängsachse des Formkerns verfahren. Die Verfahrung der Segmente der ersten und zweiten Gruppen kann dabei beispielsweise hydraulisch oder pneumatisch erfolgen.

Die Extraktion des Formkernes erfolgt insbesondere nach einer Formung eines Hohlkörpers. Insbesondere erfolgt die Extraktion aus dem Hohlkörper und der Kavität, in welcher der Hohlkörper gebildet wurde.

Im Sinne der Erfindung dienen Formkerne dazu, Hohlkörper aus Kunststoff, insbesondere aus elastomeren oder duromeren Kunststoffen, oder anderen für den Spritzguss geeignete Materialien mit Innengewinden, Nasen, Vertiefungen, Kerben, Aussparungen sowie Durchbrüchen beziehungsweise Aussparungen und anderen Hinterschneidungen in ihrer Innenkontur zu spritzen. Derartige Hohlkörper werden im Folgenden als Werkstücke bezeichnet. In einer bevorzugten Ausgestaltung umfasst das Werkstück eine Anzahl von Hinterschneidungen. In einer Ausgestaltung weist das Werkstück zumindest eine Falte, bevorzugt eine Anzahl von Falten, auf. Eine Falte umfasst insbesondere ein Faltental und eine Faltenspitze. In einer Ausgestaltung weist das Werkstück unterschiedlich große Hinterschneidungen auf. In einer Ausführungsform weist das Werkstück unterschiedlich ausgebildete Falten auf. In einer weiteren Ausgestaltung ist vorgesehen, dass eine die Faltenspitzen Umhüllende sich in Längsrichtung des Werkstückes zumindest in einem Abschnitt im Durchmesser verändert. In einer weiteren Ausgestaltung ist vorgesehen, dass eine die Faltenspitzen Umhüllende sich in Längsrichtung des Werkstückes zumindest in einem Abschnitt verjüngt bzw. im Durchmesser verkleinert. In einer weiteren Ausgestaltung ist vorgesehen, dass eine die Faltenspitzen Umhüllende sich in Längsrichtung des Werkstückes zumindest teilweise im Durchmesser im Wesentlichen gleich bleibt. In einer bevorzugten Ausführungsform ist das Werkstück ein Balg, vorzugsweise ein Faltenbalg, insbesondere für Automobile jedweder Art, weiter bevorzugt als trilober Faltenbalg insbesondere für Tripodegelenke. Faltenbälge haben insbesondere die Aufgabe, das Eindringen von Schmutz in eine Gelenkbauteil und den Austritt von Schmiermitteln aus dem Gelenkbauteil zu verhindern. Ein Faltenbereich eines Faltenbalges kann dabei Falten mit einem abnehmenden Durchmesser von einem gelenkseitigen Ende zu einem wellenseitigen Ende aufweisen, jedoch können auch in einem Teilbereich des Faltenbereichs mindestens zwei Falten einen gleichen Durchmesser aufweisen. Außenflächen des Formkernes bilden während des Spritzens die Form für die Innenkontur des Werkstückes. Insbesondere ist der Formkern ein faltenbalgbildender Formkern. Vorzugsweise nach Beendigung einer Kühlzeit wird der Formkern aus dem Spritzgusswerkzeug extrahiert. Weil die Innenkontur des Werkstückes Hinterschneidungen aufweist, ist es notwendig, dass der Formkern einen kleineren Außendurchmesser aufweist als jeder Innendurchmesser, der bei der Extraktion passiert wird. Insbesondere muss der Außendurchmesser des Formkerns kleiner sein, als der kleinste Innendurchmesser des Werkstückes. Aus dem Stand der Technik ist bereits bekannt, den Formkern hierzu in Segmente zu zerlegen und nach der Entformung eines Innenkernes die Segmente in Richtung der Mittellängsachse zu bewegen, um Ausprägungen des Formkernes aus den Hinterschneidungen des Werkstückes herauszubewegen.

Vorteilhaft an dem vorgeschlagenen Verfahren gegenüber dem Stand der Technik ist, dass durch die Bewegungsfreiheit der zweiten Gruppe von Segmenten auf zumindest einer Ebene, deren Vektor parallel zur Mittellängsachse des Spritzgusswerkzeuges ist, auch bei Hinterschneidungen von mehr als etwa 40 %, bevorzugt mehr als etwa 42 %, weiter bevorzugt mehr als etwa 45 %, und noch weiter bevorzugt mehr als etwa 50 % die einzelnen Segmenten aus den Hinterschneidungen des Werkstückes herausfahrbar sind.

Ein Wert UC einer Hinterschneidung im Sinne der Erfindung ist das prozentuale Verhältnis eines ersten Innendurchmessers D1 einer Innenkontur eines Werkstückes zu einem zweiten kleineren Innendurchmesser D2 der Innenkontur des Werkstückes, an dem eine Ausprägung des Formkerns zur Formung des ersten Innendurchmessers bei der Extraktion des Formkerns vorbeigeführt wird:

$$UC=(D1-D2)/D2 \; [\%]$$

Im Rahmen der Erfindung ist eine Hinterschneidung eine Hinterschneidung der Innenkontur eines Werkstückes, insbesondere eines Werkstückes, das mittels des Formkernes beziehungsweise mittels des Spritzgusswerkzeuges herstellbar ist. Ist das Werkstück beispielsweise ein Faltenbalg, bezeichnet eine Hinterschneidung das Verhältnis eines maximalen Innendurchmessers einer Faltenspitze zu einem minimalen Innendurchmesser eines Faltentales, an dem die Ausprägung zur Formung der Innenkontur der Faltenspitze bei der Extraktion aus dem Spritzgusswerkzeug vorbeigeführt wird.

Der Formkern weist eine Mittellängsachse auf. Die Mittellängsachse erstreckt sich vorzugsweise in Öffnungsrichtungen des Spritzgusswerkzeugs, bevorzugt in Bewegungsrichtung eines Aktuators, mittels dem das Spritzgusswerkzeug öffenbar ist. Weiter bevorzugt erstreckt sich die Mittellängsachse bei einem im Wesentlichen rotationssymmetrischen Werkstück entlang der Längsachse des Werkstückes beziehungsweise Hohlkörpers vorzugsweise entlang der Mittelachse des vorzugsweise im Wesentlichen rotationssymmetrischen Werkstückes.

Wird im Rahmen der Erfindung der Begriff "im Wesentlichen" verwendet, so gibt dies einen Toleranzbereich an, der für den Fachmann unter wirtschaftlichen und technischen Gesichtspunkten zu vertreten ist, sodass das entsprechende Merkmal noch als solches zu erkennen oder verwirklicht ist. Insbesondere ist ein im Wesentlichen rotationssymmetrisches Werkstück auf den ersten Blick als rotationssymmetrisch zu erkennen, wobei das Werkstück Einzelheiten, beispielsweise Flansche oder Befestigungsmittel, aufweisen kann, die nicht rotationssymmetrisch sind.

Eine Gruppe von Segmenten zeichnet sich insbesondere dadurch aus, dass die Segmente im Wesentlichen gleichzeitig verfahrbar sind beziehungsweise werden. Insbesondere sind die Segmente einer Gruppe gleichzeitig auf einer Ebene, deren Vektor parallel zur Mittellängsachse ist, verfahrbar. Weiter bevorzugt ist eine Gruppe von Segmenten aus den Segmenten gebildet, die im Wesentlichen gleichzeitig aus dem Spritzgusswerkzeug zumindest teilweise extrahierbar sind. Die Bewegung der Segmente einer Gruppe kann in einer Ausgestaltung zu unterschiedlichen Zeitpunkten beginnen und/oder aufhören.

Die zweite Gruppe von Segmenten verfährt zumindest in zwei Bewegungsrichtungen, wobei die Bewegungen im Wesentlichen nacheinander oder gleichzeitig erfolgen. In einer weiteren Ausgestaltung ist vorgesehen, dass die Gruppe von zweiten Segmenten drei, vier oder mehr Bewegungsrichtungen vorzugsweise im Wesentlichen nacheinander oder gleichzeitig auf zumindest einer Ebene, deren Vektor parallel zur Mittellängsachse ist, vollführt. Weiter bevorzugt ist vorgesehen, dass sich die Bewegungsrichtung der mindestens einen zweiten Gruppe von Segmenten zeitlich teilweise oder zeitlich vollständig überlagern kann. Werden beispielsweise zwei Bewegungen mit unterschiedlichen Bewegungsvektoren gleichzeitig, das heißt überlagernd, ausgeführt, so ist die resultierende Bewegungsrichtung bestimmt durch die Vektoraddition der einzelnen Bewegungsvektoren. Vorzugsweise ist eine Überlagerung einer ersten Bewegungsrichtungen beziehungsweise eines ersten Bewegungsvektoren mit einer zweiten Bewegungsrichtung beziehungsweise mit einem zweiten Bewegungsvektor im Wesentlichen zeitlich gegen Ende der Ausführung einer Bewegungsrichtung vorgesehen, so dass sich Bewegungsrichtungen insbesondere nur teilweise überlagern. Erfindungsgemäß ist vorgesehen, dass die Bewegungen in die zumindest zwei Bewegungsrichtungen im Wesentlichen zeitlich aufeinander folgen. In einer weiteren Ausführungsform ist vorgesehen, dass zumindest ein Richtungswechsel bei einer Bewegung der Segmente insbesondere der zweite Gruppe vorgesehen ist, insbesondere auf einer Ebene, deren Vektor parallel zur Mittellängsachse ist. Bevorzugt ist vorgesehen, dass sich zumindest zwei gradlinige Bewegungen auf einer Ebene, deren Vektor parallel zur Mittellängsachse ist, einander anschließen. In einer weiteren Ausgestaltung ist vorgesehen, dass zumindest zwei gradlinige Bewegungen auf einer Ebene, deren Vektor parallel zur Mittellängsachse ist, mit einer kurvenförmigen Bewegung verbunden sind. In einer weiteren Ausführungsform ist vorgesehen, dass zumindest eine kurvenförmige Bewegung auf einer Ebene, deren Vektor parallel zur Mittellängsachse ist, vorgesehen ist. In einer weiteren Ausführungsform ist vorgesehen, dass zumindest ein Segment zumindest einer Gruppe nur eine kurvenförmige Bewegung auf einer Ebene, deren Vektor parallel zur Mittellängsachse ist, ausführt. Eine kurvenförmige Bewegung wird insbesondere durch eine Überlagerung mehrerer Bewegungsrichtungen beziehungsweise Addition mehrerer Bewegungsvektoren ausgeführt, die sich insbesondere über die Zeit ändern. Bei einer Überlagerung erfolgt damit eine schräge beziehungsweise winklige Bewegung in der Ebene, deren Vektor parallel zur Mittellängsachse angeordnet ist, insbesondere im Wesentlichen auf die Mittellängsachse zu. Weiter bevorzugt ist vorgesehen, dass jedes einzelne Segment der Gruppe von zweiten Segmenten nacheinander oder gleichzeitig verfahrbar ist. Weiter bevorzugt ist vorgesehen, dass jedes Segment der Gruppe von zweiten Segmenten jeweils eine von den anderen Segmenten unterschiedliche Bewegungsrichtung verfährt. Besonders bevorzugt ist vorgesehen, dass zumindest eine Bewegungsrichtung der Segmente der Gruppe von zweiten Segmenten radial, das heißt in Richtung der Mittellängsachse, erfolgt. In einer weiteren bevorzugten Ausgestaltung ist vorgesehen, dass eine Bewegung auf zumindest einer Ebene, deren Vektor parallel zur Mittellängsachse ist, und die Bewegung entlang der Mittellängsachse gleichzeitig oder im Wesentlichen nacheinander erfolgt. Insbesondere sieht eine Ausgestaltung vor, dass zumindest eine Bewegung zumindest eines Segments der Gruppe der zweiten Segmente in genau eine oder mehrere Bewegungsrichtungen ausgeführt wird, die mit einer Bewegung entlang der Mittellängsachse einhergeht.

In einer weiteren Ausgestaltung ist vorgesehen, dass

- in einem ersten Schritt der Innenkern entlang einer Mittellängsachse des Formkerns zumindest teilweise aus dem Formkern verfahren wird,
- in einem zweiten Schritt eine erste Gruppe von ersten Segmenten in eine Bewegungsrichtung senkrecht zur Mittellängsachse verfahren wird,
- in einem dritten Schritt die erste Gruppe von ersten Segmenten entlang der Mittellängsachse verfahren wird,
- in einem vierten Schritt zumindest einer ersten Gruppe von zweiten Segmenten auf zumindest der Ebene senkrecht zur Mittellängsachse verfahren wird, wobei diese in zumindest zwei Bewegungsrichtungen im Wesentlichen nacheinander oder gleichzeitig verfahren werden,
- in einem fünften Schritt die erste Gruppe von zweiten Segmenten entlang der Mittellängsachse verfahren wird, und
- in nachfolgenden Schritten die Schritte zwei und drei und/oder vier und fünf mit weiteren Gruppen von Segmenten wiederholt wird, bis der Formkern aus dem Spritzgusswerkzeug extrahiert ist.

Der Innenkern des Formkerns ist vorzugsweise derart gestaltet, dass dieser entlang seiner Mittellängsachse aus der entsprechenden Kavität des Spritzgusswerkzeuges beziehungsweise aus dem Werkstück herausgefahren werden kann. Vorzugsweise ist der Innenkern in einem Schnitt entlang zumindest einer Ebene, deren Vektor parallel zur Mittellängsachse angeordnet ist, rund oder polygonal, zum Beispiel sechseckig oder achteckig, ausgestaltet. In einer Ausgestaltung weist der Innenkern eine Anzahl von unterschiedlichen Durchmessern entlang der Mittellängsachse auf, beispielsweise kann der Innenkern konisch oder mit Absätzen ausgestaltet sein, wobei in einer Ausführungsform die Durchmesser in Richtung der Entformung des Innenkerns größer werdend ausgestaltet sind. In einer bevorzugten Ausgestaltung ist der Innenkern kühlbar ausgestaltet. Techniken zum Kühlen eines Formkerns sind aus dem Stand der Technik bekannt.

Die ersten Segmente der ersten Gruppe verfahren vorzugsweise im zweiten Schritt in Richtung der Mittellängsachse, und vorzugsweise in einem dritten Schritt entlang der Mittellängsachse aus dem Werkstück beziehungsweise aus dem Spritzgusswerkzeug heraus. In einer Ausgestaltung ist vorgesehen, dass sich der zweite Schritt mit dem dritten Schritt zumindest teilweise überschneidet und die Bewegungen beziehungsweise Bewegungsrichtungen überlagert werden. In einer weiteren Ausgestaltung ist vorgesehen, dass der zweite und der dritte Schritt sich mehrfach wiederholen, wobei diese in einer Ausgestaltung auch jeweils zumindest teilweise überlagert stattfinden können, um beispielsweise die erste Gruppe von Segmenten aus komplizierten Hinterschneidungen herauszufahren.

Der vierte Schritt sieht insbesondere vor, dass eine erste Gruppe von zweiten Segmenten auf zumindest der Ebene senkrecht zur Mittellängsachse verfahren wird. Dabei sind zwei Bewegungsrichtungen vorgesehen, die im Wesentlichen nacheinander oder gleichzeitig verfahren werden, sich aber in einer Ausgestaltung auch teilweise oder vollständig überlagern können. Vorzugsweise verfahren die zweiten Segmente in einer ersten Bewegungsrichtung, die nicht in Richtung der Mittellängsachse gerichtet ist, weiter bevorzugt senkrecht zu einer darauf folgenden Bewegung in Richtung der Mittellängsachse.

Der fünfte Schritt ist in einer Ausführungsform teilweise überlagert mit den Bewegungen oder zumindest einer Bewegung in einer Bewegungsrichtung des vierten Schrittes.

In einer weiteren Ausgestaltung ist vorgesehen, dass zwei Gruppen von ersten Segmenten und zwei Gruppen von zweiten Segmenten vorgesehen sind. Weiterhin sieht eine Ausführungsform vor, dass mehr als zwei Gruppen von ersten Segmenten und/oder mehr als zwei Gruppen von zweiten Segmenten vorgesehen sind.

Die unterschiedlichen Schritte werden bevorzugt mit einer Anzahl von Gruppen von Segmenten so lange ausgeführt, bis der Formkern aus dem Spritzgusswerkzeug extrahiert ist.

In einer weiteren Ausführungsform ist vorgesehen, dass der Formkern in folgender Reihenfolge verfahren wird: der Innenkern, eine erste Gruppe erster Segmente, eine erste Gruppe zweiter Segmente, eine zweite Gruppe zweiter Segmente und eine zweite Gruppe erster Segmente.

In einer weiteren Ausgestaltung ist vorgesehen, dass der Formkern in folgender Reihenfolge verfahren wird: der Innenkern, eine erste Gruppe erster Segmente, eine erste Gruppe zweiter Segmente, eine zweite Gruppe erster Segmente und eine zweite Gruppe zweiter Segmente.

In einer weiteren Ausgestaltung ist vorgesehen dass der Formkern in folgender Reihenfolge verfahren wird: der Innenkern, eine erste Gruppe erster Segmente, eine erste Gruppe zweiter Segmente, eine zweite Gruppe zweiter Segmente.

In einer weiteren Ausgestaltung ist vorgesehen, dass der Formkern in folgender Reihenfolge verfahren wird: der Innenkern, eine erste Gruppe erster Segmente, eine erste Gruppe zweiter Segmente.

Insbesondere schlägt die vorliegende Erfindung einen Formkern für ein Spritzgusswerkzeug mit einem Innenkern und mit zwei ersten Gruppen A und D von ersten Segmenten und zwei zweiten Gruppen B und C von zweiten Segmenten vor, wobei die Gruppen A, B, C und D jeweils aus zwei Segmenten bestehen, wobei eine Gruppe von Segmenten sich dadurch auszeichnet, dass die Segmente gleichzeitig verfahrbar sind, wobei in einer Umfangsrichtung des Formkerns abwechselnd erste und zweite Segmente der ersten und der zweiten Gruppe angeordnet sind, und die Gruppen A und D von ersten Segmenten in einer Bewegungsrichtung senkrecht zu einer Mittellängsachse des Formkerns und die Gruppe B und C von zweiten Segmenten in zwei, im Wesentlichen zeitlich aufeinanderfolgende Bewegungsrichtungen auf zumindest einer Ebene, deren Vektor parallel zu der Mittellängsachse angeordnet ist, verfahrbar sind.

In einer weiteren Ausführungsform ist vorgesehen, dass in einer Umfangsrichtung des Formkerns abwechselnd Segmente der Gruppen A und D und Segmente der Gruppen B und C angeordnet sind. In einer Ausgestaltung sind in Umfangsrichtung die Segmente der Gruppen A, C, D, B, A, C, D, B oder umgekehrt angeordnet. In einer weiteren bevorzugten Ausgestaltung sind in Umfangsrichtung die Segmente der Gruppen A, B, D, C, A, B, D, C oder umgekehrt angeordnet. Bevorzugt werden die Segmente der Gruppen in der Reihenfolge A, B, C, D oder A, C, B, D verfahren, wobei insbesondere die Segmente einer Gruppe im Wesentlichen gleichzeitig verfahren werden. Die beiden Segmente der ersten Gruppen A und D werden bevorzugt bei Ausführungsformen mit zwei ersten Gruppen und zwei zweiten Gruppen von Segmenten als erstes (Gruppe A) und zuletzt (Gruppe D) verfahren, wohingegen die beiden Gruppen B und C von zweiten Segmenten zeitlich zwischen diesen verfahren werden, wobei eine zeitliche Überschneidung von aufhörender und beginnender Verfahrung aufeinanderfolgender Gruppen, so geometrisch ermöglicht, erfolgen kann .

In einer weiteren Ausgestaltung des Verfahrens ist vorgesehen, dass die Segmente von zumindest einer Gruppe von Segmenten, insbesondere von ersten Segmenten, zu einer Mittellängsachse des Formkerns hin mit unterschiedlich langen Wegen verfahren werden. In einer Ausgestaltung werden die Segmente der zweiten Gruppe erster Segmente unterschiedlich weit in Richtung der Mittellängsachse verfahren. Insbesondere wird die Gruppe von Segmenten derart verfahren, dass bei der in Richtung der Mittellängsachse ausgerichteten Bewegung zumindest ein Segment näher in Richtung er Mittellängsachse verfahren wird als ein weiteres Segment der Gruppe. Weiter bevorzugt kommen die Segmente in der Bewegung in Richtung der Mittellängsachse asymmetrisch in Bezug auf die Mittellängsachse zum Halten. In einer weiteren Ausgestaltung ist vorgesehen, dass zumindest ein Segment zumindest teilweise über die Mittellängsachse hinaus verfährt.

Vorteil der unterschiedlichen Verfahrwege der Segmente einer Gruppe ist, dass bei Extraktion der Segmente aus dem Werkstück eine Kollision mit Ausprägungen der Innenkontur, des Werkstückes die beispielsweise von einer Rotationssymmetrie abweichen, vermieden wird.

In einer weiteren Ausgestaltung ist vorgesehen, dass die einzelnen Segmente einer Gruppe von Segmenten spiegelsymmetrisch oder achsensymmetrisch zueinander bewegt werden, bevorzugt achsensymmetrisch im Hinblick auf die Mittellängsachse.

Die vorliegende Erfindung betrifft weiterhin einen Formkern für ein Spritzgusswerkzeug mit einem Innenkern und mit zwei ersten Gruppen A und D von ersten Segmenten und zwei zweiten Gruppen B und C von zweiten Segmenten, wobei die Gruppen A, B, C und D jeweils aus zwei Segmenten bestehen, wobei in Umfangsrichtung des Formkerns abwechselnd erste und zweite Segmente der ersten und der zweiten Gruppe angeordnet sind und die ersten Gruppen von ersten Segmenten in einer Bewegungsrichtung senkrecht zu einer Mittellängsachse des Formkernes verfahrbar sind und die zweiten Gruppen von zweiten Segmenten in zwei Bewegungsrichtungen auf zumindest einer Ebene, deren Vektor parallel zur Mittellängsachse angeordnet ist, verfahrbar sind. Bevorzugt sind die Gruppen A und D von ersten Segmenten und die Gruppen B und C von zweiten Segmenten zudem entlang der Mittellängsachse des Formkerns verfahrbar ausgebildet.

Alternativ schlägt die vorliegende Erfindung einen Formkern für ein Spritzgusswerkzeug mit einem Innenkern und mit zwei ersten Gruppen A und D von ersten Segmenten und zwei zweiten Gruppen B und C von zweiten Segmenten vor, wobei die Gruppen A bis D jeweils aus zwei Segmenten bestehen und in einer Umfangsrichtung des Formkerns abwechselnd erste und zweite Segmente der ersten und der zweiten Gruppe, bevorzugt in der Reihenfolge A, B, C, D, angeordnet sind. Bevorzugt sind die beiden ersten Segmente der Gruppe A spiegelsymmetrisch in Bezug auf eine senkrecht durch diese verlaufende und die Mittellängsachse des Formkerns in ihrer Länge umfassende Ebene ausgebildet. Weiter bevorzugt sind die ersten Segmente der Gruppe A spiegelbildlich gegenüberliegend ausgebildet. Weiter bevorzugt sind diese Segmente der ersten Gruppe A mit sich gegenüberliegenden, parallel und geradlinig ausgebildeten Kontaktwänden zu den benachbarten Segmenten der Gruppen B und C ausgebildet.

Weiter bevorzugt weist der erfindungsgemäße Formkern zweite Segmente der Gruppen B und/oder C mit jeweils gegenüberliegenden, parallel und geradlinig ausgebildeten Kontaktwänden zu je einem ersten Segment der Gruppen A und D auf.

In einer weiter bevorzugten Ausführungsform weisen die ersten Segmente der Gruppe D geradlinig ausgebildete Kontaktwände zu den zweiten Segmenten der Gruppen B und C auf. Weiter bevorzugt weist ein jedes der ersten Segmente der ersten Gruppe D jeweils einen Vorsprung auf. Weiter bevorzugt ist dieser Vorsprung dem Innenkern im eingefahrenen Zustand unmittelbar benachbart. Weiter bevorzugt ist der Vorsprung zwischen den zwei Kontaktwänden der ersten Segmente der ersten Gruppe D zu den zweiten Segmenten der Gruppen B und C angeordnet. Durch den Vorsprung werden damit durch das erste Segment der Gruppe D die zweiten Segmente der Gruppen B und C voneinander getrennt und stehen nicht unmittelbar in Kontakt. Bevorzugt sind die ersten Segmente der Gruppe D rotationssymmetrisch um 180° in Bezug auf die Mittellängsachse des Formkerns ausgebildet und im Formkern angeordnet. Hierdurch liegen die Vorsprünge der beiden ersten Segmente der Gruppe D sich nicht gegenüber. Die ersten Segmente der Gruppe D können bei Ausführung einer Bewegung senkrecht zu der Mittellängsachse des Formkerns und entlang der Mittellängsachse aneinander vorbei geführt werden, wodurch eine Extraktion der ersten Segmente der Gruppe D aus der Kavität des Spritzgusswerkzeuges beziehungsweise aus dem Werkstückbeziehungsweise Hohlkörper, bevorzugt einem Faltenbalg, heraus ermöglicht wird insbesondere auch bei Ausbildung von Hinterschneidungen von über 50 %.

In einer weiter bevorzugten Ausführungsform weist der dem Innenkern benachbarte Wandabschnitt der beiden ersten Segmente der Gruppe D maximal etwa 25 %, weiter bevorzugt maximal etwa 20 %, noch weiter bevorzugt maximal etwa 15 % einer Gesamtlänge, gebildet aus der Länge der Kontaktwände der beiden ersten Segmente der Gruppe D zu den beiden benachbarten zweiten Segmenten der Gruppen B und C, der Länge des an den Innenkern angrenzenden Wandabschnittes sowie aus den Seitenwänden des Vorsprunges, auf.

Bevorzugt sind die Paare von ersten und zweiten Segmenten einer jeden Gruppe A bis D identisch ausgebildet. In einer Ausgestaltung sind die Paare von ersten und zweiten Segmenten einer jeden Gruppe A bis D im Wesentlichen spiegelsymmetrisch ausgebildet. Bevorzugt weisen die ersten und zweiten Segmente der Gruppen A bis D eine größere Baugröße, bezogen auf einen jeden Querschnitt des Formkerns eine größere Fläche, auf, als die zweiten Segmente der Gruppen B und C.

Bevorzugt weisen die zweiten Segmente der Gruppe C einen um mindestens etwa 30 % längeren Wandabschnitt, der dem Innenkern benachbart ist, auf, als die zweiten Segmente der Gruppe B. Bevorzugt ist der an den Innenkern grenzende Wandabschnitt der zweiten Segmente der Gruppe C mindestens etwa 50% länger als der entsprechende Wandabschnitt der zweiten Segmente der Gruppe B ausgebildet.

In einer weiter bevorzugten Ausführungsform weisen die zweiten Segmente der Gruppe C zwei winklig zueinander ausgebildete Wandabschnitte, die unmittelbar an den Innenkern angrenzen, auf. Weiter bevorzugt weisen die zweiten Segmente der Gruppe B einen einzigen, geradlinig ausgebildeten Wandabschnitt auf, der unmittelbar dem Innenkern benachbart ist.

In einer weiter bevorzugten Ausführungsform sind die ersten und zweiten Segmente der Gruppen A bis D rotationssymmetrisch bei einer Drehung um 180° um die Mittellängsachse ausgebildet und angeordnet. Weiter bevorzugt sind die beiden ersten Segmente der Gruppe D unterschiedlich weit senkrecht zu der Mittellängsachse des Formkerns verschiebbar, so dass zumindest eines der ersten Segmente der Gruppe D die Mittellängsachse im verschobenen Zustand überdeckt.

Weiterhin wird ein Spritzgusswerkzeug mit einem Hinterschneidungen aufweisenden beziehungsweise bildenden Formkern, umfassend zumindest einen Innenkern und einer Anzahl von Segmenten, die um den Innenkern angeordnet sind, vorgeschlagen. Das Spritzgusswerkzeug weist zumindest einen Antrieb auf, wobei mittels des Antriebs der Innenkern und die Segmente zumindest entlang einer Mittellängsachse des Formkerns verfahrbar sind. Zumindest eine Gruppe von Segmenten ist zumindest entlang einer Mittellängsachse des Formkerns verfahrbar, wobei zumindest eine Gruppe von Segmenten mittels zumindest des Antriebes in zwei Bewegungsrichtungen auf einer Ebene, deren Vektor parallel zu der Mittellängsachse des Formkerns angeordnet ist, verfahrbar ist.

Besonders bevorzugt umfasst der Antrieb einen Aktuator, mittels dem weiter bevorzugt zumindest ein Segment unmittelbar verfahrbar ist. In einer weiteren Ausgestaltung ist vorgesehen, dass der Aktuator zumindest einen Segment mittelbar verfährt beispielsweise durch Vorsehung eines Getriebes oder einer Übertragungseinheit.

In einer besonders bevorzugten Ausgestaltung ist vorgesehen, dass der Antrieb zumindest eine Steuerplatte mit zumindest einem Führungsstift aufweist. Weiter bevorzugt ist vorgesehen, dass die Steuerplatte mittels mindestens eines Aktuators angetrieben, insbesondere verfahren wird. Der Führungsstift ist derart in oder an der Steuerplatte angeordnet, dass dieser zumindest mit einem Segment in Verbindung steht und beim Verfahren der Steuerplatte das Segment mittels des Führungsstiftes bewegt wird. In einer besonders bevorzugten Ausführungsform ist vorgesehen, dass zumindest eine Steuerplatte zumindest zwei Führungsstifte, weiterbevorzugt drei Führungsstifte oder mehr als drei Führungsstifte aufweist.

In einer weiteren Ausgestaltung ist vorgesehen, dass zumindest ein Segment zumindest eine Führungsausnehmung aufweist, die mit zumindest einem Führungsstift zusammenwirkt. Bevorzugt ist die Führungsausnehmung in einem Führungsabschnitt des Segmentes angeordnet. Die Führungsausnehmung ist in einer Ausgestaltung als Bohrung, Langloch, oder als geometrisch beliebig ausgestaltete Ausnehmung ausgestaltet.

In einer besonders bevorzugten Ausgestaltung ist vorgesehen, dass die zumindest eine Führungsausnehmung derart gestaltet ist, dass diese eine Bewegung des Führungsstiftes, der durch diese hinein- oder hindurchragt in zumindest zwei Richtungen erlaubt. In einer weiteren Ausgestaltung ist vorgesehen, dass die zumindest eine Führungsausnehmung derart ausgestaltet ist, dass sich diese relativ zu dem Führungsstift, der in diese Führungsausnehmung hineinragt, in genau eine Richtung derart bewegen kann, dass das Segment nicht durch den Führungsstift blockiert ist. Insbesondere kann sich das Segment in zumindest eine Richtung bewegen, ohne dass der Führungsstift in zumindest einer Führungsausnehmung die Bewegung behindert. Weiter bevorzugt kann sich der Führungsstift in zumindest eine Richtung bewegen, ohne dass dieser eine Bewegung des Segmentes erzwingt. Besonders bevorzugt ist vorgesehen, dass ein Segment zumindest zwei Führungsausnehmungen aufweist, in die jeweils ein Führungsstift ragt, wobei jede Kombination von Führungsstift und Führungsausnehmung derart ausgestaltet, dass sie diese genau für eine Bewegungsrichtung des Segmentes ausgestaltet ist. In einer weiteren Ausgestaltung ist vorgesehen, dass eine Kombination von Führungsausnehmung und Führungsstift für zumindest zwei Bewegungsrichtungen des Segmentes ausgestaltet ist. In einer weiteren Ausführungsform ist vorgesehen, dass zwei oder mehr als zwei Führungsstifte in einer Führungsausnehmung angeordnet sind. Weiterhin bevorzugt vorgesehen ist, dass der Führungsstift in der Führungsausnehmung das Segment in genau eine Richtung bewegt und die Führungsausnehmung derart ausgestaltet ist, dass eine Bewegung in eine zweite von der ersten Bewegungsrichtung unterschiedliche Bewegungsrichtung ermöglicht ist. Insbesondere dadurch eine Bewegung in eine zweite Bewegungsrichtung ermöglicht, dass sich der Führungsausnehmung zugeordnete Führungsstift relativ zur Führungsausnehmung in die zweite Bewegungsrichtung bewegen kann ohne Einfluss auf das Segment zu nehmen insbesondere dieses zu blockieren.

Im Sinne der Erfindung sind die Bewegungen des Segmentes, die durch eine Kombination von Führungsstift und Führungsausnehmung bewirkt werden, auf einer Ebene, deren Vektor parallel zur Mittellängsachse des Formkerns angeordnet ist. Die Bewegung auf der Ebene, deren Vektor parallel zur Mittelsenkrechten des Spritzgusswerkzeuges angeordnet ist, ist in einer Ausgestaltung zumindest teilweise mit einer Bewegung in Richtung der Mittellängsachse aus dem Spritzgusswerkzeug hinaus überlagert.

In einer weiteren Ausgestaltung ist vorgesehen, dass das zumindest ein Segment zumindest zwei Führungsausnehmungen aufweist.

Weiterhin wird ein Verfahren zur Herstellung eines Faltenbalges vorgeschlagen, das die Schritte aufweist: Bereitstellen eines oben beschriebenen Spritzgusswerkzeugs, Einspritzen mindestens eines geeigneten, spritzgussfähigen Materiales, welches auch eine Mischung solcher Materialien sein kann, in das in das Spritzgusswerkzeug, Entformen des gespritzten Faltenbalges mittels zumindest eines oben beschriebenen Verfahrens.

Faltenbälge werden üblicherweise im Spritzblasverfahren hergestellt. Bisher war es nur in diesem Verfahren möglich, Hinterschneidungen von bis zu 40 % zu realisieren. Das neue Spritzgussverfahren zur Herstellung eines Faltenbalges hingegen ermöglicht Hinterschneidungen von mehr als 40 %, bevorzugt mehr als 42 %, weiter bevorzugt mehr als 45 %, und noch weiter bevorzugt mehr als 50 %.

Das spritzgussfähige Material ist vorzugsweise ausgewählt aus mindestens einem thermoplastisch-elastomerem oder duromeren bzw. duroplastischen Material gebildet. Das thermoplastisch-elastomere Material ist dabei vorzugsweise ausgewählt aus einer Gruppe umfassend Polyurethane (TPU), Polyester, insbesondere Polyetherester oder Polyesterester (TPEE), Polyamide (TPA) und/oder Polyolefine (TPO), insbesondere Polypropylene und/oder Polyethylene. Als Duromere können zum Beispiel Phenolharze, Vinylesterharze und/oder Epoxidharze eingesetzt werden.

Weiterhin wird eine Verwendung eines oben beschriebenen Spritzgusswerkzeuges vorgeschlagen, wobei das Spritzgusswerkzeug zum Spritzgießen eines Faltenbalges verwendet wird.

Weiterhin wird ein Faltenbalg vorgeschlagen, der im Spritzgussverfahren, mit dem erfindungsgemäßen Verfahren und/oder insbesondere dem erfindungsgemäßen Spritzgusswerkzeug und/oder dem erfindungsgemäßen Formkern, hergestellt ist und der einen ersten Innendurchmesser D1 einer Innenkontur des Faltenbalges und einen zweiten Innendurchmesser D2 der Innenkontur des Faltenbalges, der kleiner als der erste Innendurchmesser D1 ist und an dem eine Ausprägung eines Formkerns zur Formung des ersten Innendurchmessers D1 bei der Extraktion des Formkerns vorbeigeführt wird, umfassend zumindest eine Hinterschneidung in der Innenkontur mit einem Wert $UC=(D1-D2)/D2$ [%] von mehr als etwa 40 % umfasst, bevorzugt mehr als etwa 42 %, weiter bevorzugt etwa 45 %, und noch weiter bevorzugt mehr als 50 % oder mehr umfasst. Bevorzugt ist der Faltenbalg ein solcher mit einer trilobenAusgestaltung im gelenkgehäuseseitigen Bindersitzbereich, wobei die triloben Bereiche einen Innendurchmesser des Faltenbalges im Bezug auf die Entformung definieren.

Weitere vorteilhafte Ausgestaltungen gehen aus den nachfolgenden Figuren hervor. Die dort dargestellten Weiterbildungen sind jedoch nicht beschränkend auszulegen, vielmehr können die dort beschriebenen Merkmale untereinander und mit den oben beschriebenen Merkmalen zur weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigtes Ausführungsbeispiel verweisen. Gleiche Teile oder Teile mit gleicher Funktion weisen im Folgenden die gleichen Bezugszeichen auf. Es zeigen

Fig.1    eine schematische Darstellung eines aus dem Standes der Technik bekannten Formkerns;

Fig.2 A    einen erfindungsgemäßen Formkern in einer Aufsicht;

Fig. 2B    der Formkern gemäß Fig. 2A mit kenntlich gemachten Bewegungsrichtungen der Segmentgruppen A bis D;

Fig.3    den Formkern gemäß Fig. 2, mit extrahiertem Innenkern in unterschiedlichen Ansichten;

Fig.4    den Formkern gemäß Fig. 2, bei dem eine erste Gruppe von ersten Segmenten in einer Bewegungsrichtung senkrecht zu einer Mittellängsachse verfahren ist in unterschiedlichen Ansichten;

Fig.5    der Formkern bei dem eine erste Gruppe von zweiten Segmenten auf einer Ebene senkrecht zur Mittellängsachse verfahren ist in unterschiedlichen Ansichten;

Fig.6    den Formkern, bei dem eine zweite Gruppe von zweiten Segmenten auf der Ebene senkrecht zur Mittellängsachse verfahren ist in unterschiedlichen Ansichten;

Fig.7    den Formkern, bei dem eine zweite Gruppe erster Segmente in Bewegungsrichtung senkrecht zur Mittellängsachse verfahren ist in unterschiedlichen Ansichten;

Fig.8    einen Antrieb zur Entformung eines Formkerns;

Fig.9    eine Teilansicht eines Führungsabschnitts eines Segmentes in Kombination mit Führungsstiften in unterschiedlichen Ansichten;

Fig.10    die Teilansicht aus Fig. 9 in eine erste Richtung verfahren in unterschiedlichen Ansichten;

Fig.11    die Teilansicht aus Fig. 9 in eine zweite Richtung verfahren in unterschiedlichen Ansichten.

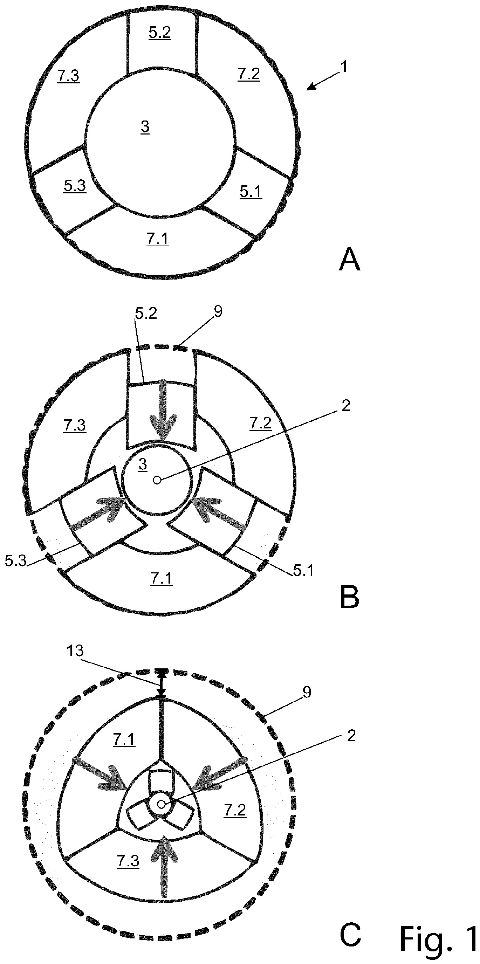

Fig.1 zeigt einen ähnlich aus der EP 0 630 734 A1 bekannten Formkern 1 eines Spritzgusswerkzeuges in einer schematischen Darstellung. Fig. 1A zeigt einen Formkern 1 umfassend einen Innenkern 3 und darum herum gelagerte Segmentgruppen 5 und 7. In Fig. 1B ist dargestellt, wie der Innenkern 3 in Richtung des Vektors der Bildebene aus dem Spritzgusswerkzeug extrahiert wird und in Folge dessen die Segmente 5.1, 5.2 und 5.3 der Segmentgruppe 5 in Richtung einer Mittellängsachse 2 aus einem angedeuteten äußeren Umfang 9 der Hinterschneidung eines geformten Werkstückes, welches der Einfachheit halber nicht dargestellt ist, herausgeführt wird. Fig. 1C zeigt, dass der Innenkern 3 sowie die Gruppe der Segmente 5 aus dem Spritzgusswerkzeug extrahiert sind und eine Gruppe 7 mit den Segmenten 7.1, 7.2 und 7.3 aus der Hinterschneidung 9 in Richtung der Mittellängsachse 2 geführt wird. Der minimale Abstand 13 der Gruppe 7 zum Umfang 9 der Hinterschneidung beträgt etwa 25 % des Radius der Hinterschneidung. Auch durch Variationen der Segmentengeometrie oder der Anzahl der Segmente ist aus dem Stand der Technik nicht bekannt, Hinterschneidungen der Innenkontur von mehr als 35 % zu erzielen.

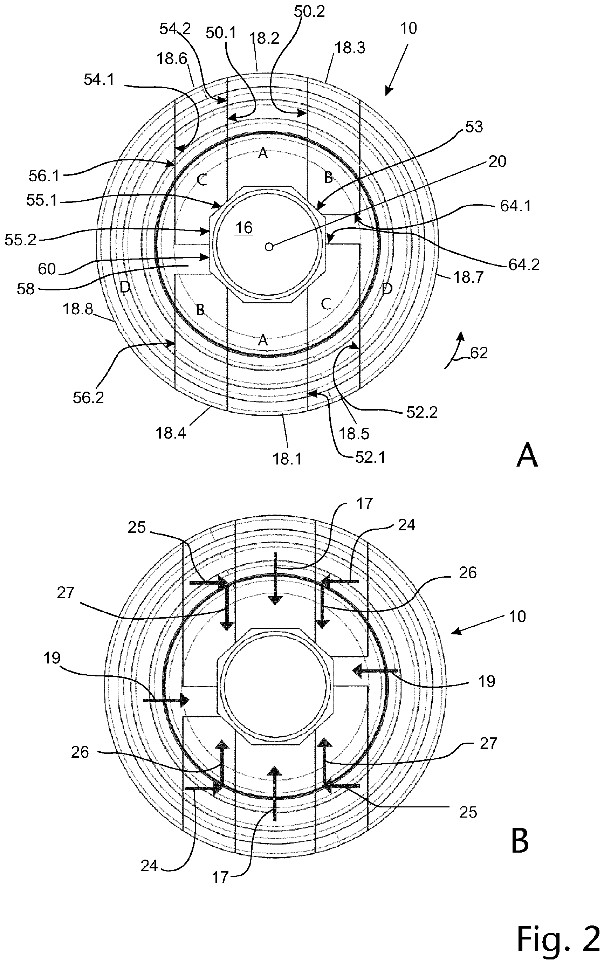

Fig. 2A zeigt einen Formkern 10 eines erfindungsgemäßen Spritzgusswerkzeuges. Der Formkern 10 umfasst einen Innenkern 16, der zumindest teilweise in einem ersten Schnitt senkrecht zur Mittellängsachse 20 des Formkerns 10 kreisrund und in einem weiteren Schnitt senkrecht zur Mittellängsachse 20 polygonal, insbesondere achteckig, ausgestaltet ist. Um den Innenkern 16 herum sind Segmente 18.1 bis 18.8 angeordnet. Fig. 2B verdeutlicht die Bewegungsrichtungen der einzelnen Segmente 18.1 bis 18.8 durch die Pfeile 17, 19, 23, 24, 25 und 26. Die beiden ersten Segmente 18.1 und 18.2 der Gruppe A weisen Kontaktwände 50.1 bis 50.2 auf, welche parallel gegenüberliegend und geradlinig ausgebildet sind und jeweils an ein zweites Segment der Gruppen B und C angrenzen. Die zweiten Segmente 18.3 und 18.4 der Gruppe B weisen ebenfalls parallel sich gegenüberliegend und geradlinig ausgebildete Kontaktwände 52.1 und 52.2 auf, welche jeweils an ein erstes Segment der Gruppen A und D angrenzen. Ähnlich sind die zweiten Segmente 18.5 und 18.6 der Gruppe C ausgebildet mit Kontaktwänden 54.1 und 54.2, die parallel zueinander und geradlinig ausgebildet sind. Diese Kontaktwände 54.1 und 54.2 grenzen jeweils an ein erstes Segment der Gruppen A und D an. Die in der Aufsicht flächengrößten ersten Segmente 18.7 und 18.8 der Gruppe D weisen jeweils eine Kontaktwand 56.1 auf, welche an ein zweites Segment 18.5 bzw. 18.6 der Gruppe C angrenzt. Jedes der ersten Segmente 18.7 und 18.8 der Gruppe D weist des Weiteren eine Kontaktwand 56.2 auf, welche jeweils an ein zweites Segment 18.4 und 18.3 der Gruppe B angrenzt. Die Kontaktwände 56.1 und 56.2 der ersten Segmente 18.7 und 18.8 der Gruppe D sind durch einen Vorsprung 58 unterbrochen, der einen unmittelbar an den Innenkern 16 angrenzenden Wandabschnitt 60 aufweist. Dieser Wandabschnitt 60 ist benachbart zu zwei weiteren Wandabschnitten 64.1 und 64.2 des Vorsprungs. Die Länge des Wandabschnitts 60 in einer Umfangsrichtung 62, wie durch den entsprechenden Pfeil in Fig. 2A verdeutlicht, beträgt etwa nur 8 % einer Gesamtlänge, gebildet aus der Länge des Wandabschnitts 60, der Länge der beiden Wandabschnitte 64.1 und 64.2 als auch der Länge der Wandabschnitte 56.1 und 56.2 eines jeden der ersten Segmente 18.7 bzw. 18.8 der Gruppe D. In Umfangsrichtung 62 wechseln sich die ersten und zweiten Segmente der Gruppen A bis D ab. Die ersten und zweiten Segmente 18.1 bis 18.8 sind rotationssymmetrisch bei einer Drehung um die Mittelachse 20 von 180° angeordnet. Ein jedes Paar von ersten und zweiten Segmenten einer jeden Gruppe A bis D ist identisch ausgebildet.

Der Formkern 10 weist somit einen Innenkern 16 und mit zwei ersten Gruppen A und D von ersten Segmenten 18.1, 18.2, 18.7 und 18.8 und zwei zweiten Gruppen B und C von zweiten Segmenten 18.3 bis 18.6 auf, wobei die Gruppen A bis D jeweils aus zwei Segmenten 18.1 und 18.2 sowie 18.7 und 18.8 bestehen und in einer Umfangsrichtung des Formkerns abwechselnd erste und zweite Segmente der ersten und der zweiten Gruppe. In Fig. 2A ist zu erkennen, dass die Segmente in Umfangsrichtung in der Reihenfolge A, B, D, C, A, B, D, C angeordnet sind. Bevorzugt werden die Segmente der Gruppen in der Reihenfolge A, B, C, D oder A, C, B, D verfahren. Insbesondere werden die Segmente einer Gruppe im Wesentlichen gleichzeitig verfahren.

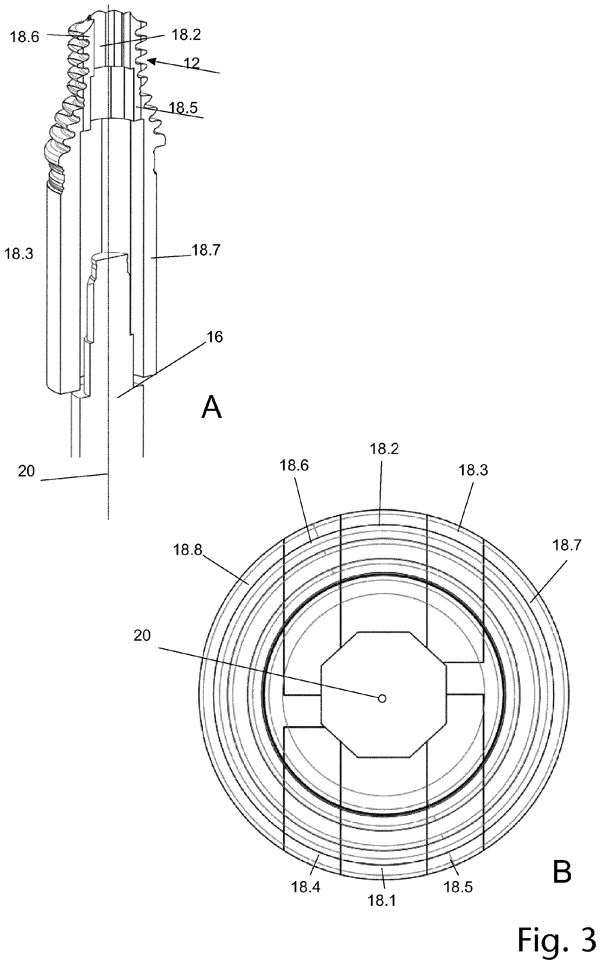

Fig.3 zeigt den Formkern aus Fig.2, wobei der Innenkern zumindest teilweise extrahiert ist. In Fig. 3A ist zu erkennen, dass der Innenkern 16 entlang der Mittellängsachse 20 zumindest soweit verfahren ist, dass die Segmente 18.1 und 18.2 in Richtung der Mittellängsachse 20 verfahren werden können. Fig. 3B zeigt die Aufsicht auf den Formkern, bei dem der Innenkern 16 extrahiert wurde. An der Aufteilung der Segmente 18.1 bis 18.8 ist zu erkennen, dass nur die Segmente 18.1 und 18.2 unmittelbar in Richtung der Mittellängsachse 20 verfahren werden können.

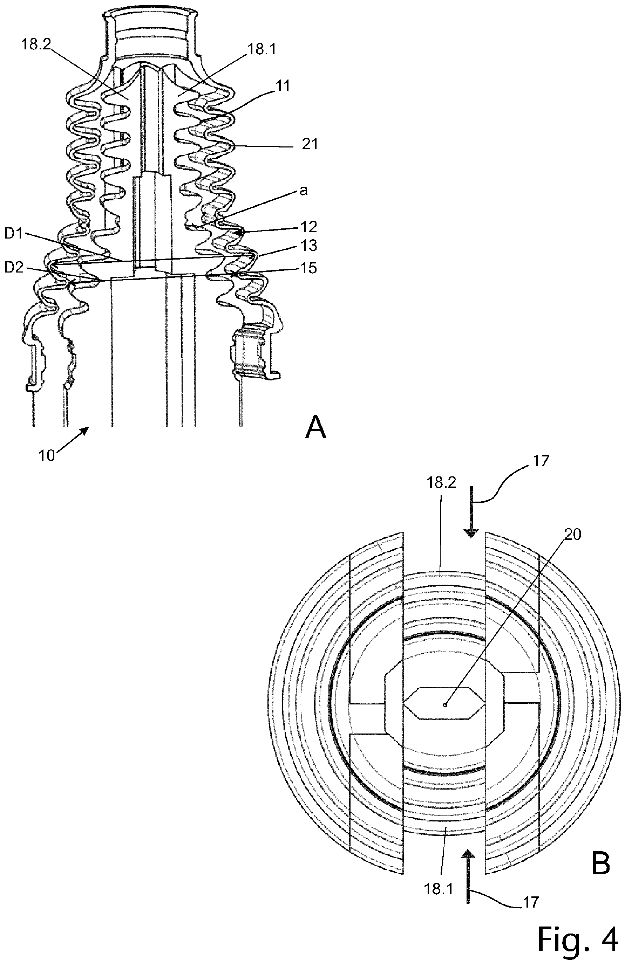

Fig.4 zeigt in Fig. 4A in einer Schnittansicht und in Fig. 4B in einer Aufsicht, die Segmente 18.1 und 18.2 des Formkerns sowie das Werkstück 21. Die Segmente 18.1 und 18.2 sind in einer Bewegungsrichtung 17 senkrecht zu einer Mittellängsachse 20 verfahren. Weiterhin ist Fig. 4A zu entnehmen, dass die Ausprägungen 11 der Segmente 18.1 und 18.2 aus den Hinterschnitten 12 des Werkstücks 21 herausgeführt sind.

Das Werkstück 21 ist als trilober Faltenbalg für Tripodegelenke ausgestaltet und weist eine Anzahl von Hinterschnitten 12 auf, die definiert sind als der Abschnitt zwischen der Innenseite einer Faltenspitze 13 und der Innenseite eines Faltentales 15, das die Ausprägung 11, die die Faltenspitze 13 formt, bei der Extraktion des Segmentes 18 passiert. Der Faltenbalg weist einen ersten Innendurchmesser D1 auf der Höhe der Faltenspitze 13 auf, an dem eine Ausprägung 11 des Formkerns 10 zur Formung des ersten Innendurchmessers D1 bei der Extraktion des Formkerns 10 vorbeigeführt wird. Weiterhin weist der Faltenbalg einen zweiten Innendurchmesser D2 auf der Höhe des Faltentales 15 auf. Der Wert UC der Hinterschneidung 12 ist das prozentuale Verhältnis des ersten Innendurchmessers D1 zu dem zweiten Innendurchmesser D2: UC=(D1-D2)/D2 [%]. Die in Fig. 4A gezeigte Hinterschneidung 12 hat einen Wert von UC von 51 %.

Wie insbesondere aus Fig. 4A zu erkennen ist, sind die Segmente vollständig aus den Hinterschneidungen 12 herausgefahren, sodass sie im nächsten Schritt entlang der Mittellängsachse 20 aus dem Spritzgusswerkzeug extrahiert werden können. Fig. 4B ist des Weiteren zu entnehmen, dass die Segmente 18.1 und 18.2 soweit in Richtung der Mittellängsachse 20 verfahren sind, dass diese sich berühren.

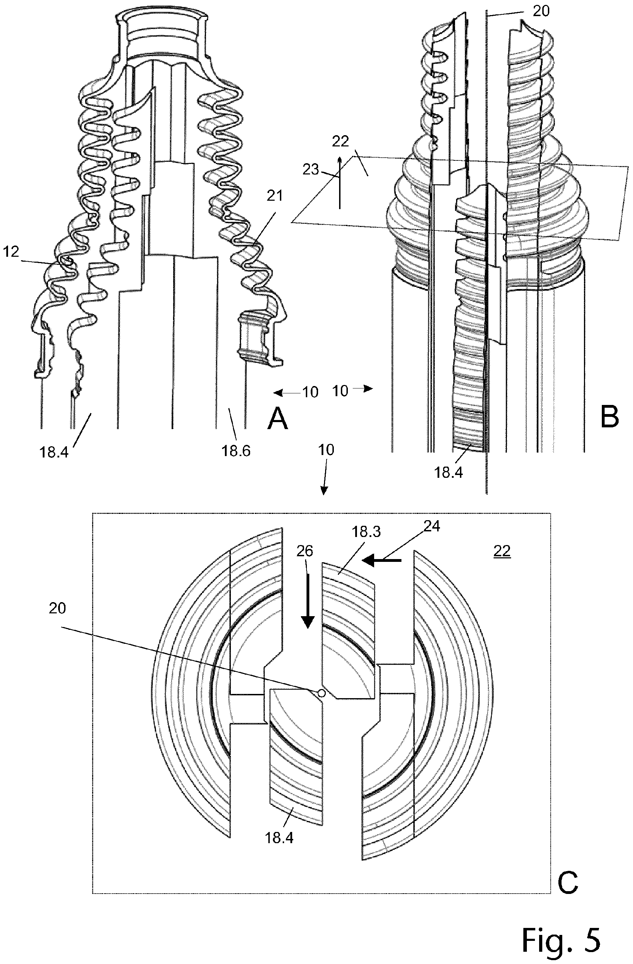

Fig. 5A zeigt den Formkern 10, wobei die Segmente 18.3 und 18.4 auf einer Ebene 22, deren Vektor 23 parallel zur Mittellängsachse 20 angeordnet ist, verfahren sind. In Fig. 5C ist zu erkennen, dass die Bewegung beispielsweise des Segmentes 18.3 sich in eine erste Bewegungsrichtung 24 und zweite Bewegungsrichtung 26 gliedert, wobei die zweite Bewegungsrichtung 26 senkrecht zur Mittellängsachse 20 gerichtet ist und die erste Bewegungsrichtung 24 senkrecht zur zweiten Bewegungsrichtung 26 gerichtet ist.

Fig. 5A zeigt, dass durch die Bewegungskomponente 24 in Kombination mit der Bewegungskomponente 26 ein vollständiges Herauslösen beziehungsweise ein vollständiges Herausfahren aus Hinterschnitten 12 des Werkstückes 21 auch bei starken Hinterschneidungen erfolgreich ausgeführt wird.

Weiterhin ist Fig. 5B zu erkennen, dass die Segmente 18.3 und 18.4 entlang der Mittellängsachse 20 in Richtung aus dem Spritzgusswerkezug beziehungsweise aus dem Werkstück 21 heraus verfahren sind.

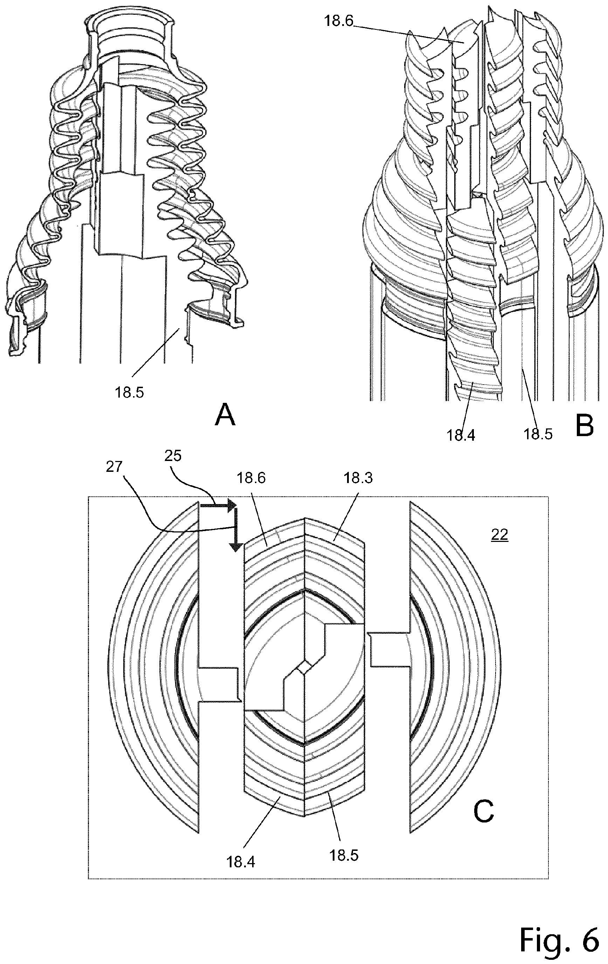

Fig. 6A zeigt in einer Teilansicht das Segment 18.5, welches aus den Hinterschnitten 12 des Werkstücks 21 herausgefahren ist. Fig.6B ist die Lage der Segmente 18.3 bis 18.6 zu entnehmen. Die Segmente 18.3 und 18.4 sind bereits entlang der Mittellängsachse 20 teilweise aus dem Spritzgusswerkzeug heraus bewegt, wenn die Segmente 18.5 und 18.6 verfahren werden. Wie Fig. 6C zu entnehmen ist, bilden die Segmente 18.3 bis 18.6 ein Paket, das gemeinsam aus dem Spritzgusswerkzeug extrahiert wird. Um die gezeigte Position der Segmente 18.5 und 18.6 zu erreichen, sind diese auf der Ebene 22 verfahren worden.

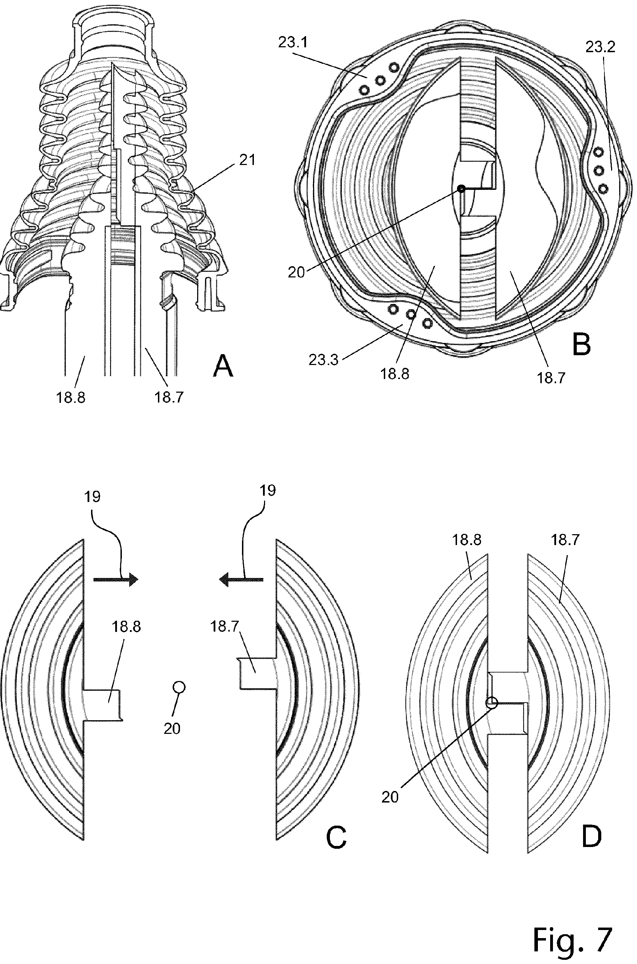

Fig.7A zeigt die verbleibenden Segmente 18.7 und 18.8, die in Richtung der Mittellängsachse 20 verfahren sind, um diese ebenfalls aus dem Werkstück 21 beziehungsweise dem Spritzgusswerkzeug zu extrahieren. Das Werkstück 21 ist ein Faltenbalg mit einem gelenkgehäuseseitigen Bindersitzbereich, der trilobe Bereiche 23.1 bis 23.3 aufweist. Ein solcher Faltenbalg macht die Anwendung eines Adapterrings überflüssig. Er ist für Tripodegelenke geeignet. Fig.7B ist zu entnehmen, dass das Werkstück 21 die triloben Bereiche 23.1 bis 23.3 aufweist. Diese weichen von der Rotationssymmetrie des Werkstückes 21 ab. Um die Segmente 18.7 und 18.8 aus dem Werkstück 21 zu entformen ohne mit den triloben Bereichen 23.1 bis 23.3 zu kollidieren, sind die Segmente 18.7 und 18.8 dieser Gruppe unterschiedlich weit in Richtung Mittellängsachse 20 des Spritzgusswerkzeuges verfahren. In Fig. 7B ist zu erkennen, dass das Segment 18.8 einen größeren Verfahrweg in Richtung Mittellängsachse 20 zurückgelegt hat als das Segment 18.7 und somit die Segmente 18.7 und 18.8 eine in Bezug auf die Mittellängsachse 20 asymmetrische Halteposition beziehungsweise Position einnehmen, von der aus die Segmente 18.7 und 18.8 aus dem Werkstück beziehungsweise dem Spritzgusswerkzeug extrahiert werden. Fig. 7C zeigt die Segmente 18.7 und 18.8 in Bezug auf die Mittellängsachse 20 in einer Stellung, bevor diese in eine Bewegungsrichtung senkrecht zur Mittellängsachse 20 verfahren werden. Fig. 7D zeigt die Segmente 18.7 und 18.8 in Bezug auf die Mittellängsachse 20 in einer Stellung, nachdem diese in eine Bewegungsrichtung senkrecht zur Mittelachse verfahren wurden.

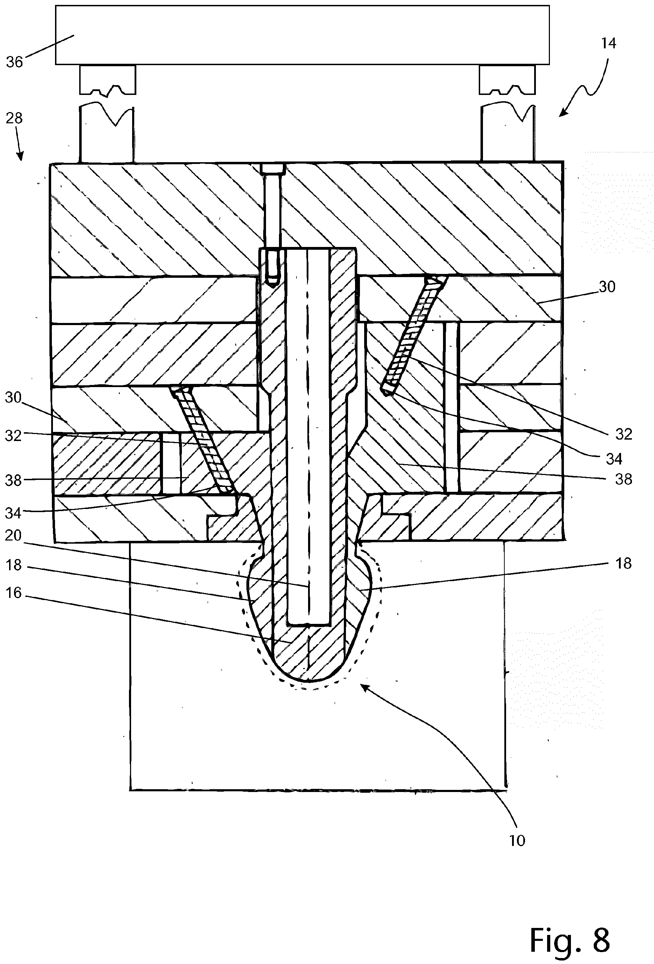

Fig. 8 zeigt schematisch einen Antrieb 28 zur Entformung eines Formkerns aus einem Spritzgusswerkzeug 14, wobei der Antrieb 28 einen Aktuator 36 umfasst, der hier als Hydraulikzylinder ausgestaltet ist. Weiterhin umfasst der Antrieb 28 zumindest eine Steuerplatte 30, welche Führungsstifte 32 umfasst. Die Führungsstifte 32 greifen in Führungsausnehmungen 34 ein, die in Führungsabschnitten 38 der Segmente 18 angeordnet sind. Die Bewegung eines Segmentes 18 sowie der Steuerplatten 30 in Bewegungsrichtung entlang der Mittellängsachse 20 des Formkerns 10 wird durch Klinkenzüge ermöglicht, die der Einfachheit halber in den Figuren nicht gezeigt sind.

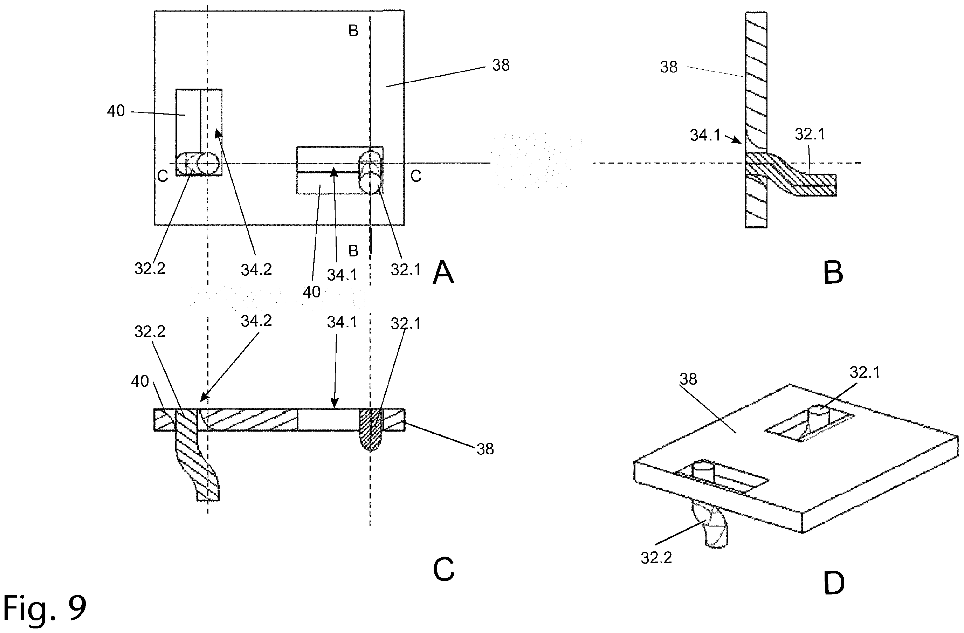

Fig. 9 zeigt in schematischer Ansicht einen Führungsabschnitt 38 eines hier nicht weiter dargestellten Segmentes 18. Der Führungsabschnitt 38 weist zwei Führungsausnehmungen 34.1 und 34.2 auf. Durch den Führungsabschnitt 34.1 greift ein Führungsstift 32.1 und durch die Führungsausnehmung 34.2 ein Führungsstift 32.2.

Fig. 9B zeigt den Schnitt B-B der Fig. 9A. Fig. 9C zeigt den Schnitt C-C der Fig. 9A. Fig. 9D zeigt den Führungsabschnitt 38 in isometrischer Darstellung. Zu erkennen ist, dass die Führungsstifte 32.2 und 32.1 jeweils Krümmungen aufweisen. Die Krümmungen der Führungsstifte 32.2 und 32.1 sind derart ausgestaltet, dass diese in Wirkverbindung mit dem Führungsabschnitt 38 bei der relativen Durchführung derselben durch die Ausnehmungen 34.1 und 34.2, jeweils Bewegungen in unterschiedliche Richtungen, insbesondere in rechtwinklig zueinander angeordneten Bewegungsrichtungen, bewirken. Weiterhin geht insbesondere aus Fig. 9A hervor, dass die Führungsausnehmungen 34.1 und 34.2 durch zwei längliche Ausnehmungen gebildet sind, deren Längserstreckung jeweils rechtwinklig zueinander angeordnet ist. Die Führungsausnehmungen 34.1 und 34.2 weisen in der gezeigten Ausführungsform Durchtrittsradien 40 auf, die ein Abgleiten des Führungsabschnittes 38 auf den Führungsstiften 32 beim Durchtritt durch die Führungsausnehmungen 34 vereinfachen.

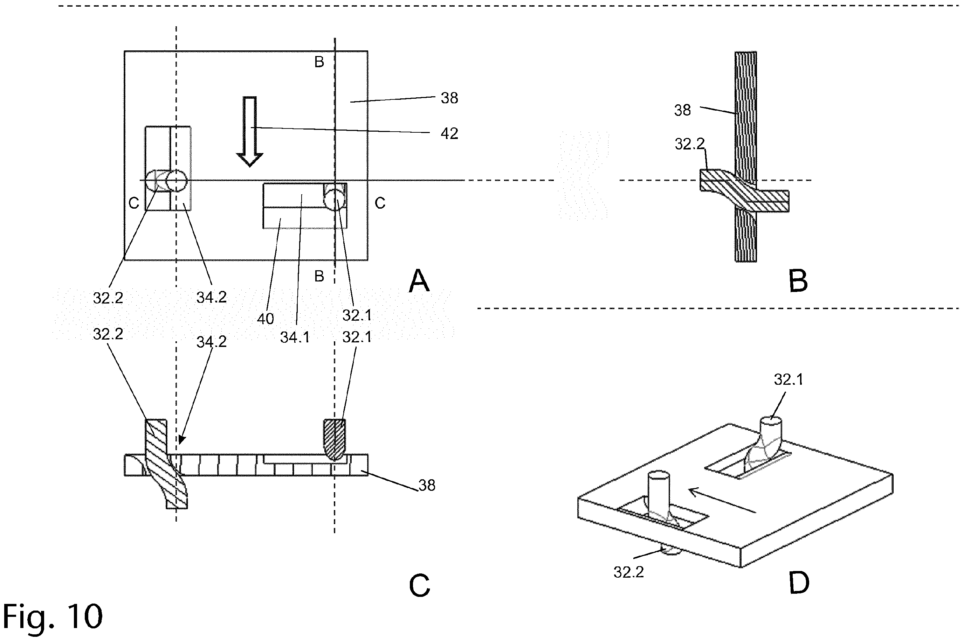

Fig. 10B zeigt den Schnitt B-B der Fig. 10A. Fig.

10C zeigt den Schnitt C-C der Fig. 10A. Fig. 10D zeigt den Führungsabschnitt 38 in isometrischer Darstellung. Die Fig. 10A bis 10D zeigen die Bewegung des Führungsabschnittes 38 und damit eines nicht dargestellten Segmentes 18 mittels der Bewegung des Führungsstiftes 32.1 durch die Führungsausnehmung 34.1 hindurch. Die Krümmung des Führungsstiftes 32.1 zwingt den Führungsabschnitt 38 in eine Bewegung Richtung des Pfeils 42, wobei durch die Längserstreckung der Ausnehmung 34.2 der Führungsstift 32.2 in dieser relativ zur Steuerplatte 38 bewegt wird beziehungsweise die Steuerplatte 38 an diesem vorbei bewegt wird, ohne dass der Führungsstift 32.2 die Steuerplatte blockiert.

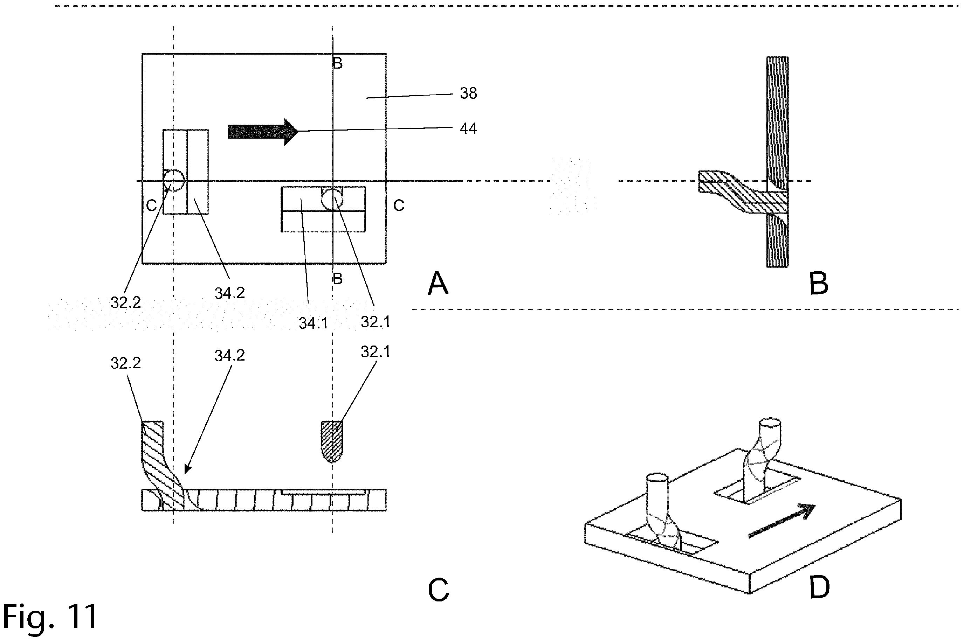

Fig. 11B zeigt den Schnitt B-B der Fig. 11A. Fig. 11C zeigt den Schnitt C-C der Fig. 11A. Fig. 11D zeigt den Führungsabschnitt 38 in isometrischer Darstellung. Die Fig. 11A bis 11D zeigen die Bewegung des Führungsabschnittes 38 bei Bewegung des Führungsstiftes 34.2 durch die Ausnehmung 34.2 hindurch, wobei durch die Krümmung der Führungsabschnitt 38 in Bewegungsrichtung des Pfeiles 44 geführt wird, wobei der Führungsstift 32.1 durch die Längsausführung der Führungsausnehmung 34.1 die Steuerplatte nicht blockiert.

Mit der vorliegenden Erfindung werden somit ein Verfahren und ein Spritzgusswerkzeug zur Verfügung gestellt, mit welchem erstmalig im Spritzgussverfahren Werkstücke, insb. Faltenbalge, hergestellt werden können, die Hinterschneidungen mit einem Wert größer 40 % aufweisen. Weiterhin wird mit der Erfindung ein Faltenbalg zur Verfügung gestellt, der effizient und mit hoher Qualität im Spritzgussverfahren mit Hinterschneidungen größer etwa 40 % hergestellt ist.

**Patentansprüche**

1. Verfahren zu einer zumindest teilweisen Extraktion eines zumindest eine Hinterschneidung (12) bildenden Formkerns (10) aus einem Spritzgusswerkzeug (14), wobei der Formkern (10) einen Innenkern (16) und eine Anzahl von Segmenten (18.1 bis 18.8), die um den Innenkern (16) angeordnet sind, aufweist, wobei der Innenkern (16) entlang einer Mittellängsachse (20) des Formkerns (10) verfahren wird, wobei zumindest eine Gruppe von ersten Segmenten (18.1, 18.2, 18.7, 18.8) in eine Bewegungsrichtung (17, 19) senkrecht zu der Mittellängsachse (20) verfahren werden und zumindest eine Gruppe von zweiten Segmenten (18.3, 18.4, 18.5, 18.6) in zumindest zwei Bewegungsrichtungen (24, 25, 26, 27) auf zumindest einer Ebene (22), deren Vektor parallel zur Mittellängsachse (20) angeordnet ist, verfahren werden, wobei die Bewegungen in die zumindest zwei Bewegungsrichtungen (24, 25, 26, 27) zeitlich aufeinander folgen.

2. Verfahren gemäß Anspruch 1, **dadurch gekennzeichnet, dass**

- in einem ersten Schritt der Innenkern (16) entlang einer Mittellängsachse (20) des Formkerns (10) zumindest teilweise aus dem Formkern (10) verfahren wird,
- in einem zweiten Schritt eine erste Gruppe von ersten Segmenten (18.1, 18.2) in einer Bewegungsrichtung (17) senkrecht zur Mittellängsachse (20) verfahren wird,
- in einem dritten Schritt die erste Gruppe von ersten Segmenten (18.1, 18.2) entlang der Mittellängsachse (20) verfahren wird,
- in einem vierten Schritt zumindest eine erste Gruppe von zweiten Segmenten (18.3, 18.4) auf zumindest der Ebene (22) senkrecht zur Mittellängsachse (20) verfahren wird, wobei diese im Wesentlichen nacheinander in zumindest zwei Bewegungsrichtungen (24, 25, 26, 27) verfahren werden,
- in einem fünften Schritt die erste Gruppe von zweiten Segmenten (18.3, 18.4) entlang der Mittellängsachse (20) verfahren wird, und
- in nachfolgenden Schritten die Schritte zwei und drei und/oder vier und fünf mit weiteren Gruppen von Segmenten (18.5, 18.6, 18.7, 18.8) wiederholt wird, bis der Formkern (10) aus dem Spritzgusswerkzeug (14) extrahiert ist.

3. Verfahren gemäß einem oder mehreren der vorhergehenden Ansprüche, **dadurch gekennzeichnet, dass** der Formkern (10) in folgender Reihenfolge verfahren wird: der Innenkern (16), eine erste Gruppe erster Segmente (18.1, 18.2), eine erste Gruppe zweiter Segmente (18.3, 18.4), eine zweite Gruppe zweiter Segmente (18.5, 18.6) und eine zweite Gruppe erster Segmente (18.7, 18.8).

4. Verfahren gemäß einem oder mehreren der vorhergehenden Ansprüche, **dadurch gekennzeichnet, dass** die ersten Segmente (18.7, 18.8) von zumindest einer Gruppe von ersten Segmenten zu einer Mittellängsachse (20) des Spritzgusswerkzeuges (14) hin mit unterschiedlich langem Weg verfahren werden.

5. Formkern (10) für ein Spritzgusswerkzeug (14) mit einem Innenkern (16) und mit zwei ersten Gruppen A und D von ersten Segmenten (18.1, 18.2, 18.7, 18.8) und zwei zweiten Gruppen B und C von zweiten Segmenten (18.3, 18.4, 18.5, 18.6), wobei die Gruppen A, B, C und D jeweils aus zwei Segmenten (18.1 bis 18.8) bestehen, wobei eine Gruppe von Segmenten (18.1 bis 18.8) sich dadurch auszeichnet, dass die Segmente (18.1 bis 18.8) gleichzeitig verfahrbar sind, wobei in einer Umfangsrichtung des Formkerns (10) abwechselnd erste und zweite Segmente der ersten und der zweiten Gruppe angeordnet sind, und die Gruppen A und D von ersten Segmenten (18.1, 18.2, 18.7, 18.8) in einer Bewegungsrichtung (17, 19) senkrecht zu einer Mittellängsachse (20) des Formkerns (10) und die Gruppe B und C von zweiten Segmenten in zwei, im Wesentlichen zeitlich aufeinanderfolgende Bewegungsrichtungen (24, 25, 26, 27) auf zumindest einer Ebene (22), deren Vektor parallel zu der Mittellängsachse (20) angeordnet ist, verfahrbar sind.

6. Spritzgusswerkzeug (14) mit einem Hinterschneidungen (12) aufweisenden Formkern (10) gemäß Anspruch 5, umfassend zumindest einen Innenkern (16) und eine Anzahl von Segmenten (18.1 bis 18.8), die um den Innenkern (16) angeordnet sind, wobei das Spritzgusswerkzeug (14) zumindest einen Antrieb (28) aufweist, wobei mittels des Antriebs (28) der Innenkern (16) und die Segmente (18.1 bis 18.8) zumindest entlang einer Mittellängsachse (20) des Formkerns (10) verfahrbar sind, wobei zumindest eine Gruppe von Segmenten (18.3, 18.4, 18.5, 18.6) mittels des Antriebs (28) in zwei, im Wesentlichen zeitlich aufeinanderfolgende Bewegungsrichtungen (24, 25, 26, 27) auf einer Ebene (22), deren Vektor parallel zu der Mittellängsachse (20) angeordnet ist, verfahrbar sind.

7. Spritzgusswerkzeug (14) gemäß Anspruch 6, **dadurch gekennzeichnet, dass** der Antrieb zumindest einen Aktuator (36) umfasst, mittels dem zumindest ein Segment (18.1 bis 18.8) unmittelbar verfahrbar ist.

8. Spritzgusswerkzeug (14) gemäß einem oder mehreren der Ansprüche 6 oder 7, **dadurch gekennzeichnet, dass** der Antrieb (28) zumindest eine Steuerplatte (30) mit zumindest einem Führungsstift (32.1, 32.2) aufweist.

9. Spritzgusswerkzeug (14) gemäß Anspruch 8, **dadurch gekennzeichnet, dass** zumindest ein Segment (18.1 bis 18.8) zumindest eine Führungsausnehmung (34.1, 34.2) aufweist, die mit zumindest einem Führungsstift (32.1, 32.2) zusammenwirkt.

10. Spritzgusswerkzeug (14) gemäß einem oder mehreren der Ansprüche 8 oder 9, **dadurch gekennzeichnet, dass** zumindest ein Segment (18.1 bis 18.8) zumindest zwei Führungsausnehmungen (34.1, 34.2) aufweist.

11. Spritzgusswerkzeug (14) gemäß einem oder mehreren der Ansprüche 6 bis 10 mit einem Formkern gemäß Anspruch 5.

12. Verfahren zur Herstellung eines Faltenbalges (21), mit den Schritten:

- Bereitstellen eines Spritzgusswerkzeugs (14) nach einem oder mehreren der Ansprüche 6 bis 11,
- Einspritzen mindestens eines Materials in das Spritzgusswerkzeug (14), und
- Entformen des gespritzten Faltenbalges (21) mittels zumindest eines Verfahrens nach einem oder mehreren der Ansprüche 1 bis 4.

13. Verwendung eines Formkerns (10) gemäß Anspruch 5 und/oder eines Spritzgusswerkzeuges (14) nach einem oder mehreren der Ansprüche 6 bis 11 zum Spritzgießen eines Faltenbalges (21).

14. Faltenbalg (21), hergestellt im Spritzgussverfahren mit einem Verfahren zur zumindest teilweisen Extraktion eines zumindest eine Hinterschneidung (12) bildenden Formkerns (10) aus einem Spritzgusswerkzeug (14) gemäß einem oder mehreren der Ansprüche 1 bis 4, umfassend einen ersten Innendurchmesser D1 einer Innenkontur des Faltenbalges (21) und einen zweiten Innendurchmesser D2 der Innenkontur des Faltenbalges (21), der kleiner als der erste Innendurchmesser D1 ist und an dem eine Ausprägung eines Formkerns (10) zur Formung des ersten Innendurchmessers D1 bei der Extraktion des Formkerns (10) vorbeigeführt wird, umfassend zumindest eine Hinterschneidung (12) in der Innenkontur mit einem Wert UC=(D1-D2)/D2 [%] von mehr als etwa 40 %.

**Claims**

1. Method for at least partially extracting a mould core (10) forming at least one undercut (12) from an injection-moulding tool (14), wherein the mould core (10) comprises an inner core (16) and a number of segments (18.1 to 18.8) arranged around the inner core (16), wherein the inner core (16) is moved along a central longitudinal axis (20) of the mould core (10), wherein at least one group of first segments (18.1, 18.2, 18.7, 18.8) being moved in a movement direction (17, 19) perpendicular to the central longitudinal axis (20), and at least one group of second segments (18.3, 18.4, 18.5, 18.6) being moved in at least two movement directions (24, 25, 26, 27) on at least one plane (22), the vector of which is being arranged in parallel to the central longitudinal axis (20), wherein the movements into the at least two movement directions (24, 25, 26, 27) are in chronological order.

2. Method according to claim 1, **characterized in that**

- in a first step, the inner core (16) is moved along the central longitudinal axis (20) of the mould core (10) at least partly out of the mould core (10),
- in a second step, a first group of first segments (18.1, 18.2) is moved in a movement direction (17) perpendicular to the central longitudinal axis (20),
- in a third step, the first group of first segments (18.1, 18.2) is moved along the central longitudinal axis (20),
- in a fourth step, at least a first group of second segments (18.3, 18.4) is moved on at least the plane (22) perpendicular to the central longitudinal axis (20), wherein they are moved essentially in succession in at least two movement directions (24, 25, 26, 27),
- in a fifth step, the first group of second segments (18.3, 18.4) is moved along the central longitudinal axis (20), and
- in subsequent steps, said steps two and three and/or four and five are repeated with further groups of segments (18.5, 18.6, 18.7, 18.8), until the mould core (10) has been extracted from the injection-moulding tool (14).

3. Method according to one or more of the preceding claims, **characterized in that** the mould core (10) is moved in the following sequence: the inner core (16), a first group of first segments (18.1, 18.2), a first group of second segments (18.3, 18.4), a second group of second segments (18.5, 18.6) and a second group of first segments (18.7, 18.8).

4. Method according to one or more of the preceding claims, **characterized in that** said first segments (18.7, 18.8) are moved by at least one group of first segments towards the central longitudinal axis (20) of the injection-moulding tool (14) in differing distances.

5. Mould core (10) for an injection-moulding tool (14) having an inner core (16) and two first groups A and D of first segments (18.1, 18.2, 18.7, 18.8) and two second groups B and C of second segments (18.3, 18.4, 18.5, 18.6), wherein each of said groups A, B, C and D consists of two segments (18.1 to 18.8), wherein one group of segments (18.1 to 18.8) is **characterized by** the fact that the segments are moveable at the same time, wherein in a circumferential direction of said mould core (10) first and second segments of the first and the second groups are arranged alternatingly, and said groups A and D of first segments (18.1, 18.2, 18.7, 18.8) can be moved in a movement direction (17, 19) perpendicular to a central longitudinal axis (20) of the mould core (10), and said group B and C of second segments can be moved in two essentially chronological movement directions (24, 25, 26, 27) on at least one plane (22), the vector of which being arranged in parallel to the central longitudinal axis (20).

6. Injection-moulding tool (14) with a mould core (10) having undercuts (12), comprising at least one inner core (16) and a number of segments (18.1 to 18.8) arranged around the inner core (16), wherein the injection-moulding tool (14) has at least one drive (28), wherein by means of said drive (28), said inner core (16) and said segments (18.1 to 18.8) can be moved at least along a central longitudinal axis (20) of the mould core (10), wherein by means of said drive (28), at least one group of segments (18.3, 18.4, 18.5, 18.6) can be moved in two essentially chronological movement directions (24, 25, 26, 27) on a plane (22), the vector of which being arranged in parallel to the central longitudinal axis (20).

7. Injection-moulding tool (14) according to claim 6, **characterized in that** the drive comprises at least one actuator (36), by means of which at least one segment (18.1 to 18.8) can be moved directly.

8. Injection-moulding tool (14) according to one or more of the claims 6 or 7, **characterized in that** the drive (28) has at least one control plate (30) with at least one guide pin (32.1, 32.2).

9. Injection-moulding tool (14) according to claim 8, **characterized in that** at least one segment (18.1 to 18.8) has at least one guiding recess (34.1, 34.2), interacting with at least one guide pin (32.1, 32.2).

10. Injection-moulding tool (14) according to one or more of the preceding claims 8 or 9, **characterized in that** at least one segment (18.1 to 18.8) has at least two guiding recesses (34.1, 34.2).

11. Injection-moulding tool (14) according to one or more of the claims 6 to 10, having one mould core according to claim 5.

12. Method for producing a boot (21) comprising the steps:

    - Providing an injection-moulding tool (14) according to one or more of the claims 6 to 11,
    - Injecting at least one material into the injection-moulding tool (14), and
    - Demoulding of the moulded boot (21) by means of at least one method according to one or more of the claims 1 to 4.

13. Use of a mould core (10) according to claim 5 and/or of an injection-moulding tool (14) according to one or more of the claims 6 two 11 for moulding a boot (21).

14. Boot (21) produced by injection moulding by means of a method for at least partially extracting a mould core (10) forming at least one undercut (12) from an injection-moulding tool (14) according to one or more of the claims 1 to 4, comprising a first inner diameter D1 of an inner contour of the boot (21) and a second inner diameter D2 of the inner contour of the boot (21), being smaller than the first inner diameter D1 and along which a shaping of a mould core (10) for forming the first inner diameter D1 is passed during the extraction of the mould core (10), comprising at least one undercut (12) in the inner contour with a value UC=(D1-D2)/D2 [%] of more than about 40 %.

## Revendications

1. Procédé permettant d'extraire au moins partiellement un noyau (10) formant au moins une contre-dépouille (12) d'un moule à injection (14), le noyau (10) comprenant un noyau interne (16) et un certain nombre de segments (18.1 à 18.8) qui sont disposés autour du noyau interne (16), le noyau interne (16) étant mus le long d'un axe longitudinal central (20) du noyau (10), au moins un groupe des premiers segments (18.1, 18.2, 18.7, 18.8) étant mus dans une direction de déplacement (17, 19) perpendiculaire à l'axe longitudinal central (20) et au moins un groupe de deuxièmes segments (18.3, 18.4, 18.5, 18.6) étant mus dans aux moins deux directions de déplacement (24, 25, 26, 27) sur au moins un plan (22) dont le vecteur est disposé parallèlement à l'axe longitudinal central (20) et les déplacements se succédant dans le temps dans les aux moins deux directions de déplacement (24, 25, 26, 27).

2. Procédé selon la revendication 1, **caractérisé en ce que**

   - dans une première étape, le noyau interne (16) est mu le long d'un axe longitudinal central (20) du noyau (10) au moins partiellement à partir du noyau (10),
   - dans une deuxième étape, un premier groupe de premiers segments (18.1, 18.2) est mu dans une direction de déplacement (17) perpendiculaire à l'axe longitudinal central (20),
   - dans une troisième étape, le premier groupe de premiers segments (18.1, 18.2) est mu le long de l'axe longitudinal central (20),
   - dans une quatrième étape, un premier groupe de deuxièmes segments (18.3, 18.4) est mu sur au moins un plan (22) perpendiculaire à l'axe longitudinal central (20), ceux-ci étant mus sensiblement l'un après l'autre dans au moins deux directions de déplacement (24, 25, 26, 27),
   - dans une cinquième étape, le premier groupe de deuxièmes segments (18.3, 18.4) est mu le long de l'axe longitudinal central (20) et
   - aux étapes suivantes, les étapes deux et trois et/ou quatre et cinq sont répétées avec d'autres groupes de segments (18.5, 18.6, 18.7, 18.8) jusqu'à ce que le noyau (10) soit extrait du moule à injection (14).

3. Procédé selon une ou plusieurs des revendications précédentes, **caractérisé en ce que** le noyau (10) est mu dans l'ordre suivant : le noyau interne (16), un premier groupe de premiers segments (18.1, 18.2), un premier groupe de deuxièmes segments (18.3, 18.4), un deuxième groupe de deuxièmes segments (18.5, 18.6) et un deuxième groupe de premiers segments (18.7, 18.8).

4. Procédé selon une ou plusieurs des revendications précédentes, **caractérisé en ce que** les premiers segments (18.7, 18.8) d'au moins un groupe de premiers segments sont mus en direction d'un axe longitudinal central (20) du moule à injection (14) avec une course de longueur différente.

5. Noyau (10) pour un moule à injection (14) avec un noyau interne (16) et avec deux premiers groupes A et D de premiers segments (18.1, 18.2, 18.7, 18.8) et deux deuxièmes groupes B et C de deuxièmes segments (18.3, 18.4, 18.5, 18.6), les groupes A, B, C et D étant chacun constitués de deux segments (18.1 à 18.8), un groupe de segments (18.1 à 18.8) pouvant être mus simultanément, les premiers et deuxièmes segments des premiers et deuxièmes groupes (18.1 à 18.8) étant disposés en alternance dans une direction périphérique du noyau (10), et les groupes A et D de premiers segments (18.1, 18.2, 18.7, 18.8) pouvant être mus dans une direction de déplacement (17, 19) perpendiculaire à un axe longitudinal central (20) du noyau (10) et les groupes B et C de deuxièmes segments dans deux directions de déplacement (24, 25, 26, 27) se succédant sensiblement dans le temps sur au moins un plan (22) dont le vecteur est disposé parallèlement à l'axe longitudinal central (20).

6. Moule à injection (14) avec un noyau (10) selon la revendication 5 présentant des contre-dépouilles (12), comprenant au moins un noyau interne (16) et un certain nombre de segments (18.1 à 18.8) qui sont disposés dans le noyau interne (16), le moule à injection (14) présentant au moins un entraînement (28), le noyau interne (16) et les segments (18.1 à 18.8) pouvant être mus au moyen de l'entraînement (28) au moins le long d'un axe longitudinal central (20) du noyau (10) et au moins un groupe de segments (18.3, 18.4, 18.5, 18.6) pouvant être mus au moyen de l'entraînement (28) dans deux directions de déplacement (24, 25, 26, 27) se succédant sensiblement dans le temps sur un plan (22) dont le vecteur est disposé parallèlement à l'axe longitudinal central (20).

7. Moule à injection (14) selon la revendication 6, **caractérisé en ce que** l'entraînement comprend au moins un actuateur (36) au moyen duquel au moins un segment (18.1 à 18.8) peut être mu directement.

8.  Moule à injection (14) selon une ou plusieurs des revendications 6 ou 7, **caractérisé en ce que** l'entraînement (28) présente au moins une plaque de commande (30) avec au moins une broche de guidage (32.1, 32.2).

9.  Moule à injection (14) selon la revendication 8, **caractérisé en ce qu'**au moins un segment (18.1 à 18.8) présente au moins un évidement de guidage (34.1, 34.2) qui collabore avec au moins une broche de guidage (32.1, 32.2).

10. Moule à injection (14) selon une ou plusieurs des revendications 8 ou 9, **caractérisé en ce qu'**au moins un segment (18.1 à 18.8) présente au moins deux évidements de guidage (34.1, 34.2).

11. Moule à injection (14) selon une ou plusieurs des revendications 6 à 10 avec un noyau selon la revendication 5.

12. Procédé permettant la fabrication d'un soufflet (21), comprenant les étapes suivantes :

    - réalisation d'un moule à injection (14) selon une ou plusieurs des revendications 6 à 11,
    - injection d'au moins un matériau dans le moule à injection (14) et
    - démoulage du soufflet (21) injecté au moyen d'au moins un procédé selon une ou plusieurs des revendications 1 à 4.

13. Utilisation d'un noyau (10) selon la revendication 5 et/ou d'un moule à injection (14) selon une ou plusieurs des revendications 6 à 11 pour l'injection d'un soufflet (21).

14. Soufflet (21) fabriqué par moulage par injection avec un procédé pour extraire au moins partiellement un noyau (10) formant au moins une contre-dépouille (12) d'un moule à injection (14) selon une ou plusieurs des revendications 1 à 4, comprenant un premier diamètre intérieur D1 d'un contour intérieur du soufflet (21) et un deuxième diamètre intérieur D2 du contour intérieur du soufflet (21) qui est plus petit que le premier diamètre intérieur D1 et devant lequel est guidée la forme d'un noyau (10) pour former le premier diamètre intérieur D1 lors de l'extraction du noyau (10), comprenant au moins une contre-dépouille (12) dans le contour intérieur avec une valeur UC = (D1 - D2)/D2 [%] de plus d'environ 40%.

5.2

7.3    7.2

1

3

5.3    5.1

7.1

A

5.2    9

7.3    7.2

2

3

5.3    5.1

7.1

B

13    9

2

7.1

7.2

7.3

C    Fig. 1

A

B

Fig. 2

Fig. 3

A

B

Fig. 4

Fig. 5

A

B

18.6

18.4    18.5

27    25    18.6    18.3

22

18.4    18.5

C

Fig. 6

18.5

Fig. 7

Fig. 8

Fig. 9

Fig. 10

Fig. 11

EP 3 504 041 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010004227 B4
- EP 2952327 A1
- US 2012153540 A1
- US 7670535 B2
- EP 0630734 A1